(19) Europäisches Patentamt
European Patent Office
Office européen des brevets

(11) EP 3 775 073 B1

(12) **EUROPÄISCHE PATENTSCHRIFT**

(45) Veröffentlichungstag und Bekanntmachung des Hinweises auf die Patenterteilung:
**12.01.2022 Patentblatt 2022/02**

(21) Anmeldenummer: **19713820.9**

(22) Anmeldetag: **03.04.2019**

(51) Int Cl.:
***C09D 133/06*** *(2006.01)* ***C08G 18/61*** *(2006.01)*
***C08G 18/62*** *(2006.01)* ***C09D 175/04*** *(2006.01)*
***C08G 18/40*** *(2006.01)*

(86) Internationale Anmeldenummer:
**PCT/EP2019/058352**

(87) Internationale Veröffentlichungsnummer:
**WO 2019/193026 (10.10.2019 Gazette 2019/41)**

(54) **ZWEI-KOMPONENTEN-SYSTEM MIT VERBESSERTER HAFTUNG**

BICOMPONENT SYSTEM WITH IMPROVED ADHESION

SYSTÈME À DEUX COMPOSANTS À ADHÉRENCE AMÉLIORÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.04.2018 EP 18165622**

(43) Veröffentlichungstag der Anmeldung:
**17.02.2021 Patentblatt 2021/07**

(73) Patentinhaber: **Covestro Intellectual Property GmbH & Co. KG**
**51373 Leverkusen (DE)**

(72) Erfinder: **HINZMANN, Dirk**
**50259 Pulheim (DE)**

(74) Vertreter: **Levpat**
**c/o Covestro AG**
**Gebäude 4825**
**51365 Leverkusen (DE)**

(56) Entgegenhaltungen:
**US-A- 5 346 958**
**US-A- 5 519 089**
**US-A- 5 710 201**
**US-A- 6 001 947**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 775 073 B1

## Beschreibung

Gegenstand der vorliegenden Erfindung ist ein Zwei-Komponenten-System, ein Verbundbauteil, welches eine Beschichtung aus dem Zwei-Komponenten-System umfasst, ein Verfahren zur Herstellung eines Verbundbauteils und eine Verwendung spezieller siloxanhaltiger Verbindungen.

Bindemittel für moderne Lacksysteme müssen eine Vielzahl von Anforderungen erfüllen. So müssen sie auf der einen Seite bestimmte lacktechnische Eigenschaften wie Kratzfestigkeit, Deckvermögen und Wetterbeständigkeit aufweisen, andererseits sollte eine gute Verarbeitbarkeit, eine wirtschaftliche Herstellung und die Erfüllung gesetzlicher Auflagen gewährleistet sein.

Aufgrund der VOC-Problematik sind lösemittel- und abspalterfreie Polyurethan-Systeme von großem Interesse, da sie nach Applikation weitgehend ohne Emission flüchtiger Bestandteile ausgehärtet werden können. Außerdem können auf diese Weise Träger beschichtet werden, die lösemittelempfindlich sind. Lösemittelfreie Bindemittelgemische sind vor allem bei Dickschichtanwendungen gefragt, sowohl aus ökologischen Gründen aber auch weil die vollständige Emission des Lösemittels unter gleichzeitiger Bildung einer homogenen, blasenfreien Schicht nicht möglich ist.

Massive beschichtete Formteile können nach allgemein bekannten Verfahren wie RIM (Reaction-Injection-Molding) hergestellt werden. Besonders vorteilhaft zur Herstellung von den oben beschriebenen Dickschichten (Beschichtungen mit hoher Schichtstärke) ist das sogenannte In-Mould-Coating (IMC). Hier werden die Beschichtungskomponenten auf den entsprechenden Träger in einem Formwerkzeug aufgetragen und in der Werkzeugkavität ausgehärtet. Neben den oben genannten Anforderungen sind die großen Vorteile der IMC-Technik die schnellen Verarbeitungszeiten, ein geringer bis niedriger Verlust an Rohstoffen sowie die Herstellung eines beschichteten Spritzgussformteils (Verbundbauteils) inklusive Beschichtung in einem Arbeitsgang.

In der EP 0 943 637 A1 werden beispielsweise Systeme zur Anwendung in RIM-Verfahren beschrieben, welche zu transparenten Polyurethan-Beschichtungen führen. Hier wird eine Polyol-Komponente auf Basis von Polyether- und / oder Polyesterpolyolen mit einer mittleren Funktionalität >3 und einer mittleren Hydroxyzahl von 300 bis 950 mgKOH/g verwendet. Die Wahl von Polyethern und / oder Polyestern als Polyolkomponente in solchen Anwendungen ist meist durch ihre niedrige Viskosität bedingt. Dabei sind Polyetherpolyole jedoch in Bezug auf die Eigenschaft der Lichtechtheit weniger gut geeignet. Je nach Anwendung ist die Chemikalien-, Lösungsmittel- und Wetterbeständigkeit von Polyesterpolyolen jedoch optimierungsbedürftig.

Auch die EP 1 484 350 A2 offenbart lösemittelfreie Zwei-Komponenten-Systeme zur Verwendung im RIM- oder IMC-Verfahren. Auch hier werden als Polyolkomponente Polyesterpolyole eingesetzt.

EP 0 693 512 A1 beschreibt lichtechte abriebfeste und lösemittelfreie Polyurethanbeschichtungen von Mischungen aus HDI-Polyisocyanaten mit Isocyanurat-Polyisocyanaten auf Basis cycloaliphatischer Diisocyanate. Als Polyolkomponenten werden hier Polyester, Polyether, Polycarbonate oder Polyestercarbonate sowie Ricinusöl und Derivate verwendet.

In der EP 0 006 517 A1 werden Polyole beschrieben, welche durch Kondensation von hydroxyfunktionellen Polyacrylatharzen mit reaktiven Polyestern und / oder Alkydharzen in Gegenwart von Alkoxygruppen enthaltenden Polysiloxan erhalten werden. Dabei erfolgt die Einkondensation des Polysiloxans zur Verbesserung der Bewitterungsbeständigkeit der resultierenden Beschichtung. Es wird beschrieben, dass eine Verdünnung mit üblichen Lösungsmitteln notwendig ist, um die für die Weiterverarbeitung notwendigen Viskositäten einzustellen. In den Beispielen werden 50 %ige Lösungen in Xylol hergestellt.

Ebenso werden in der EP 1 247 823 A2 lösemittelhaltige Bindemittel beschrieben, welche durch Polymerisation einer Polyesterkomponente und einer Acrylatkomponente erhalten werden. Dabei wird die Polyesterkomponente hergestellt unter anderem unter Einkondensierung eines methoxyfunktionellen Polysiloxans.

Ähnliche lösungsmittelhaltige Systeme (einschließlich wässrige Systeme, in denen Wasser als Lösungsmittel dient) werden in der US5,519,089 A, US5,346,958 A, US6,001,947 A, US2018/016381 A1, EP1494349 A2 und US5,710,201 A beschrieben. Alle diese Systeme enthalten Lösungsmittel und sind somit aus den oben genannten Gründen weder für die Herstellung von Dickschichten noch zur Verwendung in RIM- oder IMC-Verfahren geeignet. Zudem weisen einige dieser Systeme durch die Anwesenheit des Lösungsmittels andere Aushärtungseigenschaften auf, da beispielsweise einwertige Alkohole als Kettenabbrecher wirken können oder es durch die Anwesenheit von Wasser zu Kohlenstoffdioxidbildung und letztendlich Schaumbildung kommen kann. Ebenso kann das Lösungsmittel in RIM- oder IMC-Verfahren nicht entweichen, da hier geschlossene Spritzgussformen verwendet werden.

In der US5,519,089 A wird die Zugabe von Siloxanen mit Silylalkoxygruppen beschrieben. Solche Siloxane sind unter Feuchtigkeit hydrolysierbar und vernetzend. In keinem der zuvor genannten Dokumente wird die Verbesserung der Haftung der resultierenden Systeme auf einem Träger angesprochen. Zusätzlich ist jedoch auch zu beachten, dass in solchen lösungsmittelhaltigen Systemen, wie bereits oben ausgeführt, zur Beschichtung von Trägern/Substraten teilweise die Interaktion des Lösungsmittels mit dem Substrat ausgenutzt wird. Beispielsweise kann ein Anquellen des Substrats und damit auch die Veränderung des Substrats zu einer besseren Haftung führen. Auch hier ist ersichtlich, dass solche Erkenntnisse nicht ohne Weiteres auf lösungsmittelfreie Systeme übertragen werden können. Dies gilt

insbesondere für Anwendungen in RIM- oder IMC-Verfahren, in denen durch die prozessbedingte Lösungsmittelfreiheit die Haftung somit anders erzielt werden muss.

In der WO 2015/039837 A1 werden Bindemittel auf Basis eines hydroxyfunktionellen Acrylatharzes, eines Alkoxy- und / oder Silanol-funktionellen Polysiloxans, einer oder mehrerer Di- oder Polycarbonsäuren und einem oder mehreren Di- oder Polyolen offenbart, welche alle im Bindemittel miteinander kondensiert vorliegen. Die chemische Anbindung der Polyole und der OH-funktionellen Polyacrylate erfolgt über die Alkoxy- oder Silanolgruppen des Polysiloxans unter Ausbildung einer Si-O-C-Bindung. Auch dieses Bindemittel ist lösemittelhaltig.

EP 0 550 259 A1 beschreibt lösemittelhaltige, acrylatbasierte Harze. Dabei wird eine mindestens difunktionelle Siloxankomponente mit in das Harz einpolymerisiert. Diese Siloxankomponente weist mindestens eine 3-Acryloxypropyl-Gruppe auf, um mit Vinylmonomeren copolymerisiert werden zu können. Des Weiteren weist diese Siloxankomponente zwingend mindestens eine weitere funktionelle Gruppe auf, welche gegenüber Isocyanatgruppen reaktiv ist und somit die Vernetzungseigenschaften des Harzes optimiert.

Damit sind aus dem Stand der Technik zum einen lösemittelfreie Systeme auf Basis von Polyether- oder Polyesterpolyolen bekannt oder aber lösemittelhaltige Systeme auf Basis von Acrylaten.

Werden die lösemittelfreien Systeme in einem IMC-Verfahren eingesetzt, so wird aus diesen Systemen eine Beschichtung auf einem Träger ausgebildet. Hierbei ist es besonders wünschenswert, dass die Haftung zwischen dieser Beschichtung und dem Träger optimal ist. Keines der genannten Dokumente untersucht die Haftung der resultierenden Beschichtungen auf einem Träger.

In der WO 2015/055719 A1 und der US2011/0159292 A1 hingegen wird die Optimierung des Trägers, welcher in einem IMC-Verfahren eingesetzt werden kann, beschrieben, um eine verbesserte Haftung gegenüber einem allgemeinen Polyurethanlack aufzuweisen.

Der vorliegenden Erfindung lag daher die Aufgabe zugrunde ein Zwei-Komponenten-System bereitzustellen, welches für Dickschichtbeschichtungen nutzbar ist und bei dem mindestens ein Nachteil des Stands der Technik verbessert wird. Insbesondere lag der vorliegenden Erfindung die Aufgabe zu Grunde, ein Zwei-Komponenten-System bereitzustellen, welches für Dickschichtbeschichtungen nutzbar ist und gleichzeitig eine verbesserte Haftung auf einem thermoplastischen Träger, bevorzugt Polycarbonat, aufweist. Dabei bedeutet "Dickschichtbeschichtungen" bevorzugt, dass Schichten mit einer Schichtdicke von 1 bis 1000 $\mu$m, besonders bevorzugt 70 bis 500 $\mu$m, ganz besonders bevorzugt 90 bis 400 $\mu$m blasenfrei erhalten werden können. Insbesondere sollen die Zwei-Komponenten-Systeme geeignet sein für die Anwendung in einem RIM- und / oder IMC-Verfahren. Dabei sind die Zwei-Komponenten-Systeme weiterhin bevorzugt lösemittelfrei.

Mindestens eine, bevorzugt alle der oben genannten Aufgaben wurden durch die vorliegende Erfindung gelöst. Überraschend wurde gefunden, dass ein Zwei-Komponenten-System mit einer Polyolkomponente auf Basis von (Meth)acrylaten dann eine verbesserte Haftung auf einem thermoplastischem Träger, bevorzugt Polycarbonat, aufweist, wenn die Polyolkomponente ausschließlich primäre Hydroxygruppen aufweist und gleichzeitig mindestens eine spezielle Polysiloxan-Komponente anwesend ist.

Daher wird gemäß der vorliegenden Erfindung ein Zwei-Komponenten-System bereitgestellt, umfassend die Komponenten A) und B), wobei

A) mindestens eine (Meth)acrylatkomponente auf Basis von (Meth)acrylatmonomeren ist, welche durch Umsetzung der (Meth)acryleinheiten mindestens der Komponenten A1) und A2) hergestellt ist, wobei

A1) mindestens ein Alkylester der (Meth)acrylsäure ist und

A2) mindestens ein Hydroxyalkylester der (Meth)acrylsäure ist, welcher eine primäre Hydroxygruppe aufweist und wobei die Alkylengruppe des Hydroxyalkylesters linear ist und 2 bis 6 Kohlenstoffatome umfasst,

wobei die Komponente A) ausschließlich primäre Hydroxygruppen und eine Hydroxyzahl von 80 bis 500 mg KOH/g aufweist und

B) mindestens ein Polyisocyanat ist,
wobei die Komponente A) zusätzlich die Komponente C) umfasst, wobei

C) mindestens ein zwei- oder höherwertigen Alkohol und/oder mindestens ein Polyasparaginsäureester ist,
dadurch gekennzeichnet, dass

(a) die Komponente A) durch Umsetzung der (Meth)acryleinheiten mindestens der Komponenten A1), A2) und A3) hergestellt ist, wobei
A3) mindestens ein polysiloxanhaltiges (Meth)acrylat ist

und / oder

(b) die Komponenten A) zusätzlich die Komponente D) umfasst, wobei

D) ein Polysiloxan ist, welches mindestens eine gegenüber Komponente B) reaktive Gruppe aufweist.

Erfindungsgemäß sind die Ausführungsformen (a) und (b) und auch ihre Kombination miteinander umfasst. In Ausführungsform (a) wird mindestens eine polysiloxanhaltige Komponente A3) über die Reaktion ihrer (Meth)acrylatgruppe in die Meth)acrylatkomponente A) auf Basis von (Meth)acrylatmonomeren mit eingebunden. In dieser Variante liegt das Polysiloxan somit chemisch gebunden in der Komponente A) vor.

In der Ausführungsform (b) liegt ein Polysiloxan D), welches mindestens eine gegenüber Polyisocyanatgruppen reaktive Gruppe aufweist, physikalisch vermischt mit der Komponente A) vor. Dies bedeutet, dass das Polysiloxan der Komponente D) nicht chemisch an die (Meth)acrylatkomponente A) gebunden ist. Wird das Zwei-Komponenten-System jedoch ausgehärtet, reagiert die mindestens eine gegenüber dem Polyisocyanat der Komponente B) reaktive Gruppe mit dem Polyisocyanat der Komponente B) und wird somit in der resultierenden Beschichtung durch diese Reaktion chemisch eingebunden.

Die folgenden Ausführungen gelten, soweit nicht explizit anders angegeben, für alle erfindungsgemäßen Ausführungsformen (a) und (b) und auch ihre Kombination miteinander.Erfindungsgemäß wird ein Zwei-Komponenten-System bereitgestellt, welches die Komponenten A) und B) umfasst. Hierbei handelt es sich bevorzugt um ein Kit-of-parts. Dies bedeutet bevorzugt, dass die Komponenten A) und B) in räumlich getrennter Anordnung zueinander vorliegen. Stehen die Komponenten A) und B) in Kontakt miteinander, so erfolgt eine Reaktion dieser Komponenten. Dies bedeutet, dass ein solches in Kontakt Bringen der Komponenten A) und B) bevorzugt erst kurz vor der Anwendung beziehungsweise Aushärtung erfolgt.

Das erfindungsgemäße Zwei-Komponenten-System umfasst die Komponenten A) und B). Bevorzugt besteht es aus den Komponenten A) und B). Dabei ist vorgesehen, dass die Komponenten A) und B) jeweils noch weitere Bestandteile umfassen können, welche in ihrer chemischen Natur von denen der Definition der Komponenten A) und B) abweichen können. Beispielsweise enthält die Komponente A)zusätzlich die Komponente C). Das erfindungsgemäße Zwei-Komponenten-System setzt sich somit in Summe zusammen aus einer Komponente A) und einer Komponente B). Insbesondere bevorzugt setzt sich das erfindungsgemäße Zwei-Komponenten-System zusammen aus 0,1 bis 70 Gew.-% Komponente B) und 99,9 - 30 Gew.-% der Komponente A), bezogen auf den Festharzanteil der Komponente A). Die genannten Gewichtsanteile betragen in Summe 100 Gew.-%. Dabei weiß der Fachmann, wie er die Mengen der Komponenten A) und B) auf Basis der Äquivalentgewichte von NCO und OH der Komponenten auswählen muss.

Es hat sich überraschenderweise herausgestellt, dass das erfindungsgemäße Zwei-Komponenten-System eine verbesserte Haftung auf thermoplastischen Trägern, insbesondere Trägern, umfassend Polycarbonat, aufweist. Dabei wurde herausgefunden, dass weder die Anwesenheit von ausschließlich primären Hydroxygruppen in der Komponente A) alleine noch die Anwesenheit einer Polysiloxankomponente gemäß Ausführungsform (a) (chemische Einbindung in Komponente A)) und / oder Ausführungsform (b) (physikalische Einbindung in Komponente A)) zu einer solchen Verbesserung der Haftung führt. Insoweit liegt ein synergistischer Effekt der Anwesenheit von ausschließlich primären Hydroxygruppen und der Anwesenheit einer speziellen Polysiloxankomponente vor. Ohne an eine Theorie gebunden sein zu wollen, wird vermutet, dass die ausschließliche Anwesenheit der primären Hydroxygruppen zu einer Reaktivität der Komponente A) gegenüber B) führt, die so optimiert ist, dass die Polysiloxangruppen ausreichend Zeit haben, sich in der abbindenden Beschichtung für eine optimierte Haftung auszurichten und gleichzeitig die Beschichtung in einer wirtschaftlichen Zeit mit guten mechanischen Eigenschaften aushärtet.

Dabei ist das erfindungsgemäße Zwei-Komponenten-System geeignet für die Herstellung von Dickschichtbeschichtungen. Besonders bevorzugt bedeutet dies, dass sie geeignet sind, um Schichten mit einer Schichtdicke von 1 bis 1000 $\mu$m, besonders bevorzugt 70 bis 500 $\mu$m, ganz besonders bevorzugt 90 bis 400 $\mu$m zu erhalten. Des Weiteren bevorzugt sind diese Dickschichten blasenfrei. Dabei wird bevorzugt unter dem Begriff "blasenfrei" verstanden, dass keine mit dem bloßen Augen sichtbaren Übergänge innerhalb der Dickschichtbeschichtung zwischen zwei Phasen, bevorzugt Gas und dem Feststoff der Beschichtung, erkennbar sind. Dabei ist die Phasengrenzfläche der Dickschichtbeschichtung zur Umgebungsluft nicht miteingeschlossen, da dieser Übergang nicht "innerhalb" der Dickschichtbeschichtung liegt. Die Dickschichtbeschichtungen weisen bevorzugt eine homogene Oberfläche auf.

Insbesondere bevorzugt ist das erfindungsgemäße Zwei-Komponenten-System geeignet für die Anwendung in einem RIM- und / oder IMC-Verfahren. Mit dieser Geeignetheit sind insbesondere die bereits oben beschriebenen strukturellen Anforderungen verbunden, dass das erfindungsgemäße Zwei-Komponenten-System bevorzugt im Wesentlichen lösungsmittelfrei ist und/oder für Dickschichtbeschichtungen geeignet. Bevorzugt ist das erfindungsgemäße Zwei-Komponenten-System dadurch gekennzeichnet, dass die Komponenten A) und B) in Summe maximal 3 Gew.-%, besonders bevorzugt maximal 1 Gew.-% eines Lösemittels bezogen auf das Gesamtgewicht des Zwei-Komponenten-Systems enthalten. Ganz besonders bevorzugt ist das Zwei-Komponenten-System lösemittelfrei. Bei einem Lösemittel

handelt es sich bevorzugt um dem Fachmann bekannte organische oder wässrige Lösemittel bzw. Wasser, welche im Wesentlichen inert gegenüber den Komponenten A) und B) sind, jedoch eingesetzt werden, um die Viskosität der Komponenten A) und / oder B) zu verändern. Besonders bevorzugt umfasst das erfindungsgemäße Zwei-Komponenten-System maximal 3 Gew.-%, bevorzugt maximal 1 Gew.-%, ganz besonders bevorzugt kein Lösemittel, welches ausgewählt wird aus der Gruppe, bestehend aus Glykolethern, wie Ethylenglykoldimethylether, oder Glykoletherester; Ester, wie Butylacetat, Butylglykolacetat, 3-Methoxy-n-butylacetat, Butyldiglykolacetat, Methoxypropyl-acetat, Ethoxypropylacetat, Ethyl-3-Ethoxypropionat, Isobutylacetat oder Amylacetat; Ketone, wie Methyl-namylketon, Methylethylketon, Methylisobutylketon, Diisobutylketon, Cyclohexanon, Isophoron; aromatische Kohlenwasserstoffe, wie Xylol;aliphatische Kohlenwasserstoffe und Wasser oder wässrige Systeme, die bis zu 60 Gew.-%, bevorzugt bis zu 75 Gew.-%, besonders bevorzugt bis zu 90 Gew.-% Wasser in Bezug auf das Gesamtgewicht des wässrigen Systems enthalten. Ebenso bevorzugt umfasst das erfindungsgemäße Zwei-Komponenten-System maximal 3 Gew.-%, bevorzugt maximal 1 Gew.-%, ganz besonders bevorzugt kein Lösemittel, welches ausgewählt wird aus der Gruppe, bestehend aus monofunktionellen Alkoholen, wie n-Propanol, iso-Propanol, n-Butanol, tert-butyl-Butanol, iso-Butanol, Pentanol, 2-Methyl-1-butanol, iso-Pentanol, neo-Pentanol, Hexanol, Heptanol, Octanol, Allylalkohol, Benzylalkohol, Cyclohexanol, und Ethern, wie Dibutylether, Ethylvinylether, Methodytoluol, Diphenylether, Dioxan, Acetal, Glycerolether, Tetrahydrofuran, 1,2-Dimethoxyethan, Methylcarbitol, 2-Methoxyethanol, 2-Ethoxyethanol, 2-Butoxyethanol.

**Komponente A)**

Erfindungsgemäß umfasst die Komponente A) mindestens eine (Meth)acrylatkomponente auf Basis von (Meth)acrylatmonomeren, welche durch Umsetzung der (Meth)acryleinheiten mindestens der Komponenten A1) und A2) hergestellt ist, wobei

A1) mindestens ein Alkylester der (Meth)acrylsäure ist und

A2) mindestens ein Hydroxyalkylester der (Meth)acrylsäure ist, welcher eine primäre Hydroxygruppe aufweist und wobei die Alkylengruppe des Hydroxyalkylesters linear ist und 2 bis 6 Kohlenstoffatome umfasst,

wobei die Komponente A) ausschließlich primäre Hydroxygruppen und eine Hydroxyzahl von 80 bis 500 mg KOH/g aufweist.

Bevorzugt wird unter dem Ausdruck "(Meth)acrylatkomponente auf Basis von (Meth)acrylatmonomeren" eine polymere Komponente verstanden, welche ausschließlich durch die Reaktion von Methacrylaten und / oder Acrylaten miteinander entsteht. Dies bedeutet bevorzugt, dass die Komponente A) ausschließlich durch die Reaktion von Monomeren erhalten wird, welche mindestens eine (Meth)acrylatgruppe aufweisen und das Polymer durch die Reaktion dieser (Meth)acrylatgruppen miteinander aufgebaut wird. Insbesondere ist es bevorzugt, dass das durch die Umsetzung der (Meth)acryleinheiten entstehende Polymerrückgrat der Komponente A) keinerlei Ether- und/oder Estergruppen aufweist. Dies hat insbesondere den Vorteil, dass die Komponente A) in der resultierenden Beschichtung lichtecht, vergilbungsfrei, chemikalienbeständig, lösungsmittelbeständig und wetterbeständig ist.

Erfindungsgemäß umfasst der Ausdruck, dass die Komponente A) "ausschließlich primäre Hydroxygruppen aufweist" bevorzugt, dass die Komponente A) mehrere unterschiedliche Komponenten aufweisen kann, in denen Hydroxygruppen sind (beispielsweise durch zwei unterschiedliche Hydroxyalkylester der (Meth)acrylsäure der Komponente A2)), in diesem Fall aber alle Komponenten, welche Hydroxygruppen aufweisen, ausschließlich primäre Hydroxygruppen aufweisen.

Erfindungsgemäße Alkylester der (Meth)acrylsäure A1) sind insbesondere Alkylester mit 1 bis 12 Kohlenstoffatomen im Alkylrest. Hierzu zählen beispielsweise Methylmethacrylat, Methylacrylat, Ethylhexylacrylat, Ethylmethacrylat, Ethylacrylat, Isobornyl-Methacrylat, Isobornylacrylat, n-Butylacrylat, n-Butylmethacrylat, iso-Butylacrylat, iso-Butylmethacrylat, tert-Butylacrylat und tert.-Butylmethacrylat. Besonders bevorzugt sind hierbei tert-Butylacrylat oder Ethylacrylat.

Als Hydroxyalkylester der Acrylsäure bzw. Methacrylsäure A1) können erfindungsgemäß Hydroxyalkyl(meth)acrylatester mit 2 bis 6 Kohlenstoffatomen im linearen Hydroxyalkylrest eingesetzt werden, wie beispielsweise Hydroxyethylacrylat, Hydroxyethylmethacrylat, Hydroxypropylmethacrylat, Hydroxypropylacrylat, Hydroxybutylmethacrylat, Hydroxybutylacrylat oder deren Mischungen. Besonders bevorzugt Hydroxyethylacrylat oder Hydroxybutylacrylat.

Dabei ist der Fachmann in der Lage, die einzelnen (Meth)acrylsäureester und auch gegebenenfalls weitere Bestandteile der Komponente A) so auszuwählen beziehungsweise zu variieren, dass im Wesentlichen die gewünschte Härte und Kratzfestigkeit der resultierenden Beschichtung resultieren. Dabei weiß der Fachmann, dass, je räumlich anspruchsvoller der Alkylrest in einem (Meth)acrylsäureester ist, desto höher die Glasübergangstemperatur der resultierenden Beschichtung wird. Ebenso weiß der Fachmann, dass Methacrylate eine Beschichtung mehr Härte verleihen

als Acrylate. Bevorzugt werden die Komponenten A1) und / oder A2) so ausgewählt, dass eine Glasübergangstemperatur der ausgehärteten Beschichtung von 0 bis 80 °C, besonders bevorzugt 10 bis 70 °C und ganz besonders bevorzugt 25 bis 60 °C resultiert. Dabei wird die Glasübergangstemperatur bevorzugt, wie in den Beispielen beschrieben, bestimmt.

Es ist des Weiteren bevorzugt, dass die Komponente A) hergestellt ist durch Umsetzung der (Meth)acryleinheiten mindestens der Komponenten A1) und A2), wobei

A1) mindestens zwei voneinander unterschiedliche Alkylester der (Meth)acrylsäure sind und

A2) mindestens zwei voneinander unterschiedliche Hydroxyalkylester der (Meth)acrylsäure sind, welche jeweils eine primäre Hydroxy-Gruppe aufweisen und wobei die Alkylengruppen der Hydroxyalkylester jeweils linear sind und 2 bis 6 Kohlenstoffatome umfassen. Somit umfasst die Komponente A) bevorzugt mindestens vier voneinander unterschiedliche (Meth)acrylsäureester und gegebenenfalls noch die Komponente A3).

Dabei ist es weiterhin bevorzugt, dass die Komponente A2) mindestens zwei voneinander unterschiedliche Hydroxyalkylester umfasst und davon die eine Alkylengruppen des einen Hydroxyalkylesters 2 oder 3 Kohlenstoffatome umfasst und die Alkylengruppe des mindestens einen anderen Hydroxyalkylesters 4 oder 5 Kohlenstoffatome umfasst. Ganz besonders bevorzugt umfasst die Komponente A2) eine Mischung aus Hydroxyethylacrylat und Hydroxybutylacrylat. Weiterhin ist es bevorzugt, dass die Komponente A1) eine Mischung aus tert-Butylacrylat und Ethylacrylat umfasst. Ganz besonders bevorzugt besteht die Komponente A1) aus tert-Butylacrylat und Ethylacrylat und die Komponente A2) aus Hydroxyethylacrylat und Hydroxybutylacrylat.

Bevorzugt umfasst die Komponente A) von 20 bis 85 Gew.-%, besonders bevorzugt von 40 bis 80 Gew.-%, ganz besonders bevorzugt von 60 bis 75 Gew.-% der Komponente A1) und von 80 bis 15 Gew.-%, besonders bevorzugt von 60 bis 20 Gew.-%, ganz besonders bevorzugt von 40 bis 25 Gew.-% der Komponente A2), wobei die Gew.-% auf das Gesamtgewicht der Komponenten A1) und A2) bezogen sind.

Dabei umfasst die Komponente A) weiterhin bevorzugt in der Ausführungsform (a) und der Kombination der Ausführungsform (a) mit der Ausführungsform (b) 0,5 bis 15 Gew.-%, bevorzugt 1 bis 12 Gew.-% der Komponente A3), wobei die Gew.-% auf die Summe der einzelnen Komponenten mit (Meth)acryleinheiten bezogen ist, die die Komponente A) bilden.

Ebenso bevorzugt umfasst die Komponente A) in der Ausführungsform (b) und der Kombination der Ausführungsform (a) mit der Ausführungsform (b) 0,25 bis 10,00 Gew.-%, bevorzugt 0,3 bis 5 Gew.-%, ganz besonders bevorzugt 0,4 bis 2 Gew.-% der Komponente D), wobei die Gew.-% auf die Summe der einzelnen Komponenten mit (Meth)acryleinheiten bezogen ist, die die Komponente A) bilden. Je nach chemischer Struktur und Menge der Komponente D) können Entmischungseffekte mit der Komponente A) auftreten. Diese sind jedoch für den Fachmann beispielsweise durch Reduzierung der Menge der Komponente A) innerhalb der oben genannten Grenzen oder Erhöhung der Phenylsubstitutionen der Komponente D) am Si-Atom vermeidbar. Der Fachmann ist somit in der Lage, die Menge und Struktur der Komponente D) insbesondere innerhalb der genannten Bevorzugungen anzupassen, so dass keine Entmischung auftritt und der erfindungsgemäße Effekt erzielt wird.

Die Komponente A) kann des Weiteren mindestens eine aromatische Vinylverbindung, wie beispielsweise Styrol, alpha-Methylstyrol oder Vinyltoluol und mindestens eine (Meth)acrylsäure enthalten. Es ist bevorzugt, dass die Komponente A) durch Umsetzung der (Meth)acryleinheiten mindestens der folgenden Komponenten erhalten wird:

0 bis 30 Gew.-% mindestens einer aromatischen Vinylverbindung, bevorzugt Styrol, alpha-Methylstyrol oder Vinyltoluol

20 bis 75 Gew.-% der Komponente A1),

10 bis 35 Gew.-% der Komponente A2),

0 bis 5 Gew.-% mindestens einer (Meth)acrylsäure und

0 bis 10 Gew.-% der Komponente A3),

jeweils bezogen auf das Gesamtgewicht der Komponente A).

In der erfindungsgemäßen Ausführungsform (a) und der Kombination der Ausführungsform (a) mit der Ausführungsform (b) ist das erfindungsgemäße Zwei-Komponenten-System des Weiteren dadurch gekennzeichnet, dass die Komponente A) durch Umsetzung der (Meth)acryleinheiten mindestens der Komponenten A1), A2) und A3) hergestellt ist, wobei A3) mindestens ein polysiloxanhaltiges (Meth)acrylat ist. Dies bedeutet bevorzugt, dass die Komponente A3)

mindestens eine (Meth)acrylat-Gruppe und ein Polysiloxan-Segment umfasst. Die Komponente A3) ist bevorzugt monofunktionell. Dies bedeutet, dass sie nur eine (Meth)acrylat-Gruppe aufweist. Weist die Komponente A3) mehr als eine Funktionalität auf, so sind die funktionellen Gruppen bevorzugt ausschließlich (Meth)acrylat-Gruppen.

Im Vergleich zur im Stand der Technik beschriebenen Einkondensation des Polysiloxans in eine Hydroxygruppen enthaltende Komponente ist es erfindungsgemäß vorteilhaft, dass das Polysiloxan A3) über die (Meth)acrylat-Gruppe(n) in die Komponente A) eingebaut ist. Dadurch resultiert eine Si-C-Bindung (und keine Si-O-C-Bindung), wodurch die Komponente weniger hydrolyseempfindlich ist. Durch den Einbau der Komponente A3) in die Komponente A) entsteht somit ein Propfcopolymer, welches ein statistisches Poly(meth)acrylat-Rückgrat und Polysiloxanketten aufweist.

Es ist bevorzugt, dass das mindestens eine polysiloxanhaltige (Meth)acrylat A3) dargestellt wird durch die Formel (I)

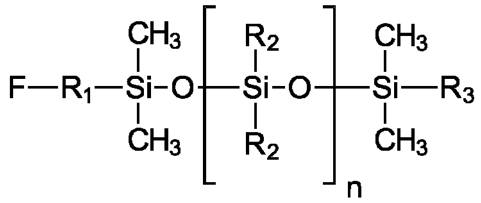

(I),

in der $R_1$ für eine Alkylengruppe, bevorzugt für eine lineare oder verzweigte Alkylengruppe mit 1 bis 18 Kohlenstoffatomen, besonders bevorzugt 2 bis 6 Kohlenstoffatomen, steht,

$R_2$ jeweils unabhängig voneinander für eine Alkyl- oder Arylgruppe, bevorzugt eine lineare oder verzweigte Alkylgruppe mit 1 bis 18 Kohlenstoffatomen oder eine Arylgruppe mit 6 bis 18 Kohlenstoffatomen, besonders bevorzugt eine Methylgruppe oder eine Phenylgruppe steht,

$R_3$ für eine Alkylgruppe, bevorzugt für eine lineare oder verzweigte Alkylengruppe mit 1 bis 18 Kohlenstoffatomen, besonders bevorzugt 2 bis 6 Kohlenstoffatomen, steht,

F für eine Acryloxy oder Methacryloxygruppe steht und

n die mittlere Anzahl an Wiederholungseinheiten darstellt und zwischen 1 bis 70 liegt, bevorzugt zwischen 5 bis 65 und besonders bevorzugt zwischen 20 bis 35.

Damit ist das Molekulargewicht Mn der Komponente A3) bevorzugt so gewählt, dass es zwischen 500 und 5000 g/mol, vorzugsweise zwischen 600 und 4000 g/mol und ganz besonders bevorzugt zwischen 700 und 3000 g/mol liegt. Das Molekulargewicht wird bevorzugt über dem Fachmann bekannte Methoden bestimmt.

Geeignete Komponenten A3) sind beispielsweise von der Fa. Shin-Etsu Chemicals unter den kommerziellen Namen, KF-2012, X-22-174BX und X-22-174ASX erhältlich..

In der erfindungsgemäßen Ausführungsform (b) und der Kombination der Ausführungsform (a) mit der Ausführungsform (b) ist das erfindungsgemäße Zwei-Komponenten-System dadurch gekennzeichnet, dass die Komponenten A) zusätzlich die Komponente D) umfasst, wobei D) ein Polysiloxan ist, welches mindestens eine gegenüber Komponente B) reaktive Gruppe aufweist. Dabei umfasst ist die Komponente D) bevorzugt ein Polysiloxan, welches mindestens eine Amino-, Mercapto-, Hydroxy- oder Hydroxy-Polyethergruppe aufweist. Besonders bevorzugt wird das Polysiloxan der Komponente D) dargestellt durch die Formel (II)

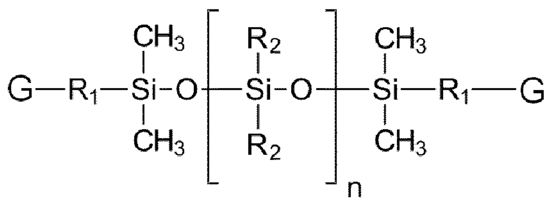

(II),

in der $R_1$ jeweils unabhängig voneinander für eine Alkylengruppe, bevorzugt für eine lineare oder verzweigte Alkylengruppe mit 1 bis 18 Kohlenstoffatomen, besonders bevorzugt 2 bis 6 Kohlenstoffatomen, steht,

$R_2$ jeweils unabhängig voneinander für eine Alkyl- oder Arylgruppe, bevorzugt eine lineare oder verzweigte Alkylgruppe mit 1 bis 18 Kohlenstoffatomen oder eine Arylgruppe mit 6 bis 18 Kohlenstoffatomen, besonders bevorzugt eine Methylgruppe oder eine Phenylgruppe steht,

G jeweils unabhängig voneinander für eine Amino-, Mercapto-, Hydroxy- oder Hydroxy-Polyethergruppe, bevorzugt für eine Amino- oder Hydroxygruppe steht und

n die mittlere Anzahl an Wiederholungseinheiten darstellt und zwischen 1 bis 50 liegt, bevorzugt zwischen 5 bis 40 und besonders bevorzugt zwischen 6 bis 32.

Damit ist das Molekulargewicht Mn der Komponente D) bevorzugt so gewählt, dass es zwischen 500 und 6000 g/mol, vorzugsweise zwischen 600 und 5000 g/mol, ganz besonders bevorzugt zwischen 700 und 4500 g/mol liegt. Das Molekulargewicht wird bevorzugt über dem Fachmann bekannte Methoden bestimmt.

Geeignete Komponenten A3) sind beispielsweise von der Fa. Shin-Etsu Chemicals unter den kommerziellen Namen KF-6000, X-22-9409, X-22-1660B-3, X-22-4952, X-22-4272 und KF-6123 oder der Firma Evonik Industries AG unter dem kommerziellen Namen Tegomer H-Si 2315 oder H-Si 6441P erhältlich.

Die Herstellung der erfindungsgemäßen Komponente A) kann entsprechend der dem Fachmann bekannten Verfahren als Lösungs- oder Massepolymerisation erfolgen, bevorzugt als Lösungspolymerisation. Dabei können Lösemittel mit Siedepunkten von 80°C bis 220°C, bevorzugt 100°C bis 185°C für die Lösungspolymerisation eingesetzt werden. Beispiele für solche Lösungsmittel sind: Glykolether, wie Ethylenglykoldimethyleter, Glykoletherester, Ethyl- wie Butylglykolacetat, 3-Methoxy-n-butylacetat, Butyldiglykolacetat, Methoxypropyl-acetat, Ethoxypropylacetat, Ethyl-3-Ethoxypropionat, Isobutylacetat, Amylacetat; und Ketone, wie Metyl-namylketon, Methylethylketion, Methylisobutylketon, Diisobutylketon, Cyclohexanon, Isophoron; aromatische Kohlenwasserstoffe, wie Xylol.

Die Polymerisation kann kontinuierlich oder diskontinuierlich (im sogenannten Batch-Verfahren) durchgeführt werden. Bevorzugt wird die Polymerisation im Semibatchverfahren durchgeführt, d.h. das Lösemittel und ggf. Monomere und / oder Reaktivverdünner wie z.B. mehrwertige Alkohole werden im Reaktionsgefäß vorgelegt, während die weiteren Monomere und der Initiator über einen oder mehrere Zuläufe in einer Zeit von 2 bis 15 Stunden, bevorzugt 3 bis 8 Stunden zudosiert werden.

betragen. Die Polymerisation wird bei Temperaturen zwischen 80 und 180°C, vorzugsweise bei 80°C bis 140°C durchgeführt.

Das Polymerisationsverfahren kann entweder in An- oder Abwesenheit eines Kettenüberträgers durchgeführt werden. Als Kettenüberträger können typische, für die radikalische Polymerisation beschriebene Spezies eingesetzt werden, wie sie dem Fachmann bekannt sind.

Zu den schwefelfreien Molekulargewichtsreglern gehören beispielsweise dimeres alpha-Methylstyrol (2,4 Diphenyl-4-methyl-1-penten), Enolether aliphatischer und / oder cycloaliphatischer Aldehyde, Terpene, β-terpinen, Terpinolen, 1,4-Cyclohexadien, 1,4-Dihydronaphtalin, 1,4,5,8-Tetrahydronaphtalin, 2,5-Dihydrofuran, 2,5-Dimethylfuran und / oder 3,6-Dihydro-2H-pyran, bevorzugt ist dimeres alpha-Methylstyrol.

Als schwefelhaltige Molekulargewichtsregler können vorzugsweise Mercaptoverbindungen, Dialkylsulfide, Dialkyldisulfide und / oder Diarylsulfide eingesetzt werden. Folgende Polymerisationsregler werden beispielhaft genannt: Di-n-butylsulfid, Di-n-octylsulfid, Diphenylsulfid, Thiodiglykol, Ethylthioethanol, Diisopropylsulfid, Di-n-butyl-disulfid, Di-n-hexyldisulfid, Diacetyldisulfid, Diethanolsulfid, Di-t-butyltrisulfid und Dimethylsulfoxid. Bevorzugt als Molekulargewichtsregler eingesetzte Verbindungen sind Mercaptoverbindungen, Dialkylsulfide, Dialkyldisulfide, und / oder Diarylsulfide. Beispiele für diese Verbindungen sind Ethylthioglykolat, 2-Ethylhexylthioglykolat, Pentaerythrittetrathioglykolat, Cystein, 2-Mercaptoethanol, 1,3-Mercaptopropanol, 3-Mercaptopropan-1,2-diol, 1,4-Mercaptobutanol, Mercaptoessigsäure, 3-Mercaptopropionsäure, Thioglykolsäure, Mercaptobernsteinsäure, Thioglycerin, Thioessigsäure, Thioharnstoff, und Alkylmercaptane wie n-Butylmercaptan, n-Hexylmercaptan, t-Dodecylmercaptan oder n-Dodecylmercaptan. Im Rahmen der vorliegenden Erfindung wird die Verwendung von 2-Mercaptoethanol sowie Thioglycerol als Kettenüberträger ganz besonders bevorzugt.

Die Molekulargewichtsregler werden bevorzugt in Mengen von 0,05 bis 10 Gew.-%, insbesondere 1 bis 6 Gew.-% und besonders bevorzugt 2 - 5,5 Gew.-% bezogen auf die bei der Polymerisation eingesetzten Monomere, verwendet.

Die OH-Zahl (OHZ) der erfindungsgemäßen Komponente A) liegt im Bereich von 80 bis 500 mg KOH/g, vorzugsweise im Bereich von 100 bis 400 mg KOH/g, besonders bevorzugt im Bereich von 120 bis 350 mg KOH/g. Die Bestimmung der OH-Zahl erfolgt titrimetrisch. Die Probe wird dabei mit Essigsäureanhydrid in Gegenwart von Pyridin

Die OH-Zahl (OHZ) der erfindungsgemäßen Komponente A) liegt im Bereich von 80 bis 500 mg KOH/g, vorzugsweise im Bereich von 100 bis 400 mg KOH/g, besonders bevorzugt im Bereich von 120 bis 350 mg KOH/g. Die Bestimmung der OH-Zahl erfolgt bevorzugt titrimetrisch. Die Probe wird dabei mit Essigsäureanhydrid in Gegenwart von Pyridin acetyliert. Pro Hydroxylgruppe entsteht ein Mol Essigsäure; während das überschüssige Essigsäureanhydrid zwei Mol Essigsäure liefert. Der Verbrauch an Essigsäure wird titrimetrisch aus der Differenz zwischen Haupt- und einem parallel durchzuführenden Blindwert ermittelt. Unter Berücksichtigung der verbrauchten ml 0,5 n Kalilauge im Haupt- und Blindversuch sowie der Säurezahl (SZ) der Probe und der Einwaage, wird die Hydroxylzahl errechnet.

$$\mathrm{OHZ} = \frac{(\mathrm{b}-\mathrm{a})\ \mathrm{x}\ 28{,}05}{\mathrm{E}} + \mathrm{SZ}$$

a = verbrauchte ml 0,5 n Kalilauge im Hauptversuch

b = verbrauchte ml 0,5 n Kalilauge im Blindversuch

E = Einwaage in g

Die gewünschte Säurezahl (SZ) für das erfindungsgemäße Bindemittel liegt im Bereich von 0,1 bis 20 mg KOH/g, vorzugsweise im Bereich von 0,5 bis 10 mg KOH/g, ganz besonders bevorzugt 1 bis 5 mg KOH/g. Die Bestimmung der Säurezahl erfolgt ebenfalls bevorzugt titrimetrisch. Die Säurezahl gibt an, wie viel mg KOH notwendig ist, um die in 1 g Fettsäure enthaltenen freien Fettsäuren zu neutralisieren. Eine geeignete Einwaage wird in ein Becherglas eingewogen, in ca.100 ml neutralisiertem Ethanol gelöst und mit Natronlauge potentiometrisch bis zum Endpunkt titriert. Die Auswertung der Säurezahl wird wie folgt bestimmt:

$$\mathrm{SZ}\left[mgKOH/g\right] = \frac{V \times 56.1 \times n \times f}{\mathrm{E}}$$

V = Verbrauch Titrant (ml)

n = Normalität Titrant

E = Einwaage Probe (g)

f = Faktor Titrant

Die Molekulargewichte Mn der erfindungsgemäßen Komponente A) liegen zwischen 700 bis 3000 g/mol, bevorzugt 800 bis 2000 g/mol. Die Bestimmung von Molekulargewichten erfolgt im Rahmen der vorliegenden Erfindung und soweit nicht anders angegeben durch GPC-Messungen. Zur Bestimmung des gewichtmittleren Molekulargewichts Mw, des zahlenmittleren Molekulargewichts Mn sowie der Polydispersität Mw/Mn wurden folgende Messbedingungen eingehalten: Säulenkombination SDV 1000/10000 Å (Länge 65 cm), Temperatur 30 °C, THF als mobile Phase, Fließrate 1 ml/min, Probenkonzentration 10 g/l, RI-Detektor. Die Auswertung der erfindungsgemäßen Bindemittel erfolgte gegen Polystyrol-Standard (162-2.570.000 g/mol).

**Komponente B)**

Bei der erfindungsgemäßen Komponente B) handelt es sich um mindestens ein Polyisocyanat. Dabei weist die Komponente B) bevorzugt mindestens zwei NCO-Gruppen auf. Die verwendbaren Polyisocyanate sind lacktypische

Polyisocyanate wie zum Beispiel Desmodur® N-Typen der Firma Covestro Deutschland AG oder die Vestanat® HT-Typen der Firma Evonik Industries AG.

Bevorzugte Polyisocyanate sind die dem Fachmann an sich bekannten aromatischen, araliphatischen, aliphatischen oder cycloaliphatischen Polyisocyanate einer NCO-Funktionalität von bevorzugt $\geq 2$, welche auch Iminooxadiazindion-, Isocyanurat-, Uretdion-, Urethan-, Allophanat-, Biuret-, Harnstoff-, Oxadiazintrion, Oxazolidinon-, Acylharnstoff- und/oder Carbodiimid-Strukturen aufweisen können. Diese können einzeln oder in beliebigen Mischungen untereinander eingesetzt werden.

Die vorstehend genannten Polyisocyanate basieren dabei auf dem Fachmann an sich bekannten Di- bzw. Triisocyanaten mit aliphatisch, cycloaliphatisch, araliphatisch und/oder aromatisch gebundenen Isocyanatgruppen, wobei es unerheblich ist, ob diese unter Verwendung von Phosgen oder nach phosgenfreien Verfahren hergestellt wurden. Beispiele für solche Di- bzw. Triisocyanate sind 1,4-Diisocyanatobutan, 1,5-Diisocyanatopentan, 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 4,4'-Diisocyanatodicyclohexylmethan (Desmodur® W, Bayer AG, Leverkusen, DE), 4-Isocyanatomethyl-1,8-octandiisocyanat (Triisocyanatononan, TIN), $\omega,\omega'$-Diisocyanato-1,3-dimethylcyclohexan ($H_6XDI$), 1-Isocyanato-1-methyl-3-isocyanato-methylcyclohexan, 1-Isocyanato-1-methyl-4-isocyanato-methylcyclohexan, Bis-(isocyanatomethyl)-norbornan, 1,5-Naphthalendiisocyanat, 1,3- und 1,4-Bis-(2-isocyanato-prop-2-yl)-benzol (TMXDI), 2,4- und 2,6-Diisocyanatotoluol (TDI) insbesondere das 2,4 und das 2,6-Isomere und technische Gemische der beiden Isomeren, 2,4'- und 4,4'-Diisocyanatodiphenylmethan (MDI), polymeres MDI (pMDI) 1,5-Diisocyanatonaphthalin, 1,3-Bis(isocyanatomethyl)benzol (XDI) sowie beliebige Mischungen genannter Verbindungen.

Bevorzugt weisen die Polyisocyanate dabei eine mittlere NCO-Funktionalität von 2,0 bis 5,0, bevorzugt von 2,2 bis 4,5, besonders bevorzugt von 2,2 bis 2,7 und einen Gehalt an Isocyanatgruppen von 5,0 bis 37,0 Gew.-%, bevorzugt von 14,0 bis 34,0 Gew.-% auf.

In einer bevorzugten Ausführungsform werden Polyisocyanate oder Polyisocyanatgemische der vorstehend genannten Art mit ausschließlich aliphatisch und/oder cycloaliphatisch gebundenen Isocyanatgruppen eingesetzt.

Ganz besonders bevorzugt basieren die Polyisocyanate der vorstehend genannten Art auf Hexamethylendiisocyanat, Isophorondiisocyanat, den isomeren Bis-(4,4'-isocyanatocyclohexyl)methanen sowie deren Mischungen.

Der Anteil an Polyisocyanat der Komponente B) wird bevorzugt so gewählt, dass auf eine Hydroxylgruppe der erfindungsgemäßen Komponente A) 0,5 bis 1,5 bevorzugt 0,9 bis 1,1 und besonders bevorzugt 1,0 Isocyanat-Gruppen entfallen.

**Komponente C)**

Im erfindungsgemäßen Zwei-Komponenten-System ist immer eine Komponente C), welche mindestens ein zwei- oder höherwertigen Alkohol und/oder mindestens ein Polyasparaginsäureester ist, mindestens in einer der Komponenten A) und B) zusätzlich umfasst. Die Komponente C) ist somit ein Bestandteil mindestens der Komponente A) und /oder Komponente B).

Die Komponente C) wird auch als Reaktivverdünner bezeichnet und dient der Viskositätseinstellung der Komponente A). Bevorzugt wird der zwei- oder höherwertige Alkohol ausgewählt aus der Gruppe, bestehend aus Ethandiol, Diethylenglykol, 1,2- bzw. 1,3-Propandiol, 2-Methyl-1,3-propandiol, Dipropylenglykol, 1,4-Butandiol, 1,3-Butandiol, 1,5 Pentandiol, 1,6-Hexandiol, 1,10-Decandiol, 1,12-Dodecandiol, Glycerin, Trimethylolpropan und 8(9)-Dihydroxymethyltricyclo[5.2.1.02.6]decan (TCD-Alkohol-DM). Vorzugsweise werden Ethandiol, Diethylenglykol, 1,2- bzw. 1,3-Propandiol, 2-Methyl-1,3-propandiol, 1,4-Butandiol, 1,3-Butandiol eingesetzt. Weiterhin können auch Polyasparaginsäureester als reaktivverdünnende Komponente eingesetzt werden. Geeignete Polyasparaginsäureester sind beispielsweise von der Firma Covestro Deutschland AG unter dem kommerziellen Namen Desmophen NH 1220, Desmophen NH 1420, Desmophen NH 1520 und Desmophen NH 2850 XP erhältlich. Polyasparaginsäureester können bevorzugt nach der allgemeinen Formel (III) beschrieben werden, wobei X eine Alkylen- oder Cycloalkylengruppe ist.

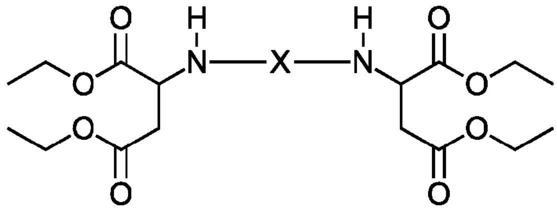

Formel (III)

In einer bevorzugten Ausführungsform umfasst die Komponente C) keine Polyasparaginsäureester.

Erfindungsgemäß umfasst der Begriff "Alkohol" bevorzugt auch lineare oder verzweigte Alkohole, welche Estergruppen und/oder Ethergruppen enthalten. In diesem Fall kann der Alkohol auch oligomer sein. Beispiele für solche Komponenten sind Capa 2043, Capa 3031, W' Pol 1181/03 oder 1181/09. In diesem Fall ist die Komponente A) in einem mengenmäßigen Überschuss zu dem oligomeren Alkohol der Komponente C) vorhanden. Wie bereits oben beschrieben, dient Komponente C) als Reaktivverdünner zur Einstellung der Viskosität der Komponenten A). Dadurch sind entsprechende nachteilige Eigenschaften, die das erfindungsgemäße Zwei-Komponenten-System durch die Anwesenheit von Ether- oder Estergruppen aufweisen könnte, durch die geringen Mengen dieser Gruppen vernachlässigbar.

Die **Komponente D)** wurde bereits unter der Komponente A) näher beschrieben.

Das erfindungsgemäße Zwei-Komponenten-System ist bevorzugt dadurch gekennzeichnet, dass das mindestens eine der Komponenten A) und B) zusätzlich mindestens einen Hilfs- oder Zusatzstoff umfasst. Diese werden bevorzugt ausgewählt aus der Gruppe, bestehend aus Katalysatoren, Reaktionsverzögerern, Pigmenten, Farbstoffen, Flammschutzmitteln, Stabilisatoren, Weichmachern, fungistatisch oder bakteriostatisch wirkenden Substanzen, Füllstoffen und lacktypischen Additiven.

Bei den Katalysatoren handelt sich beispielsweise um tertiäre Amine (wie Triethylamin, Tributylamin, N-Methylmorpholin, N-Ethylmorpholin, N,N,N',N'-Tetramethylethylendiamin, Pentamethyldiethylentriamin und höhere Homologe, 1,4-Diazabicyclo-(2,2,2)octan, N-Methyl-N'-dimethylaminoethylpiperazin, Bis-(dimethylaminoalkyl)piperazine, N,N-Dimethylbenzylamin, N,N-Dimethylcyclohexylamin, N,N-Diethylbenzylamin, Bis-(N,N-diethylamino-ethyl)adipat, N,N,N',N'-Tetramethyl-1,3-butandiamin, N,N-Dimethyl-β-phenylethylamin, 1,2-Dimethylimidazol, 2-Methylimidazol), monocyclische und bicyclische Amide, Bis-(dialkylamino)alkylether, Amidgruppen (vorzugsweise Formamidgruppen) aufweisende tertiäre Amine, Mannichbasen aus sekundären Aminen (wie Dimethylamin) und Aldehyden, (vorzugsweise Formaldehyd oder Ketonen wie Aceton, Methylethylketon oder Cyclohexanon) und Phenolen (wie Phenol, Nonylphenol oder Bisphenol), gegenüber Isocyanatgruppen aktive Wasserstoffatome aufweisende tertiäre Amine (z.B. Triethanolamin, Triisopropanolamin, N-Methyldiethanolamin, N-Ethyldietanolamin, N,N-Dimethylethanolamin), sowie deren Umsetzungsprodukte mit Alkylenoxiden wie Propylenoxid und/oder Ehtylenoxid, sekundärtertiäre Amine, Silaamine mit Kohlenstoff-Silicium-Bindungen (2,2,4-Trimethyl-2-silamorpholin und 1,3-Diethylaminomethyltetramethyldisiloxan), stickstoffhaltige Basen (wie Tetraalkylammoniumhydroxide), Alkalihydroxide (wie Natriumhydroxid, Alkaliphenolate wie Natriumphenolat), Alkalialkoholate (wie Natriummethylat), und/oder Hexahydrotriazine.

Die Reaktion zwischen NCO-Gruppen und Zerewitinoff-aktiven Wasserstoffatomen wird in an sich bekannter Weise auch durch Lactame und Azalactame stark beschleunigt, wobei sich zunächst ein Assoziat zwischen dem Lactam und der Verbindung mit acidem Wasserstoff ausbildet.

Es können auch organische Metallverbindungen, insbesondere organische Zinn- und/oder Bismuthverbindungen, als Katalysatoren verwendet werden. Als organische Zinnverbindungen kommen neben schwefelhaltigen Verbindungen wie Di-n-octyl-zinnmercaptid vorzugsweise Zinn(II)-salze von Carbonsäuren wie Zinn(II)-acetat, Zinn(II)-octoat, Zinn(II)-ethylhexoat und Zinn(II)-laurat und die Zinn(IV)-Verbindungen, z.B. Dibutylzinnoxid, Dibutylzinndichlorid, Dibutylzinndiacetat, Dibutylzinndilaurat, Dibutylzinnmaleat oder Dioctylzinndiacetat in Betracht. Organische Bismuth-Katalysatoren werden beispielsweise in der Patentanmeldung WO 2004/000905 beschrieben.

Selbstverständlich können alle oben genannten Katalysatoren als Gemische eingesetzt werden. Von besonderem Interesse sind dabei Kombinationen aus organischen Metallverbindungen und Amidinen, Aminopyridinen oder Hydrazinopyridinen.

Die Katalysatoren werden in der Regel in einer Menge von etwa 0,001 bis 10 Gew.%, bezogen auf die Gesamtmenge an Verbindungen mit mindestens zwei gegenüber Isocyanaten reaktionsfähigen Wasserstoffatomen (mindestens Komponente A) und C)), eingesetzt.

Als Reaktionsverzögerer kommen z.B. sauer reagierende Stoffe (wie Salzsäure oder organische Säurehalogenide) in Frage.

Als lacktypische Additive / Komponenten kommen beispielsweise Pigmente oder Farbstoffe und Flammschutzmittel der an sich bekannten Art (z.B. Tris-chlorethylphosphat, Trikresylphosphat oder Ammoniumphosphat und -polyphosphat), ferner Stabilisatoren gegen Alterungs- und Witterungseinflüsse, Weichmacher und fungistatisch und bakteriostatisch wirkende Substanzen, Füllstoffe (wie Bariumsulfat, Kieselgur, Ruß oder Schlämmkreide), Entschäumer, Entlüfter, Slip- und Gleitadditive, Dispergieradditive, Antiscratchadditive; UV-Stabilisatoren (UV-Absorber, HALS) und Substratnetzmittel (wie beispielsweise Tego Wet 260) in Betracht.

In einem weiteren Aspekt der vorliegenden Erfindung wird ein Verbundbauteil, umfassend einen Träger und mindestens eine Beschichtung, welche in direktem Kontakt mit dem Substrat bzw. dem Träger steht, bereitgestellt, wobei das Substrat bzw. der Träger eine thermoplastische Zusammensetzung umfasst und die Beschichtung erhalten wird durch Aushärtung des erfindungsgemäßen Zwei-Komponenten-Systems. Dabei ist dem Fachmann bekannt, wie er die Aushärtung des erfindungsgemäßen Zwei-Komponenten-Systems bewirkt. Bevorzugt wird die Beschichtung dabei hergestellt durch Auspolymerisation des erfindungsgemäßen Zwei-Komponenten-Systems in direktem Kontakt mit dem zuvor aus der thermoplastischen Zusammensetzung geformten und erstarrten Träger.

Bevorzugt umfasst die thermoplastische Zusammensetzung des Substrats bzw. Trägers mindestens ein Polycarbonat oder Polymethymethacrylat, besonders bevorzugt Polycarbonat. Dabei handelt es sich weiter bevorzugt um ein aromatisches (Co)Polycarbonat. Ganz besonders bevorzugt basiert das (Co)Polycarbonat auf Bisphenol A und gegebenenfalls einem weiteren, von Bisphenol A verschiedenen Bisphenol. Erfindungsgemäß werden die Begriffe "Substrat" und "Träger" bevorzugt synonym verwendet und sind daher austauschbar.

Die Verbundbauteile können grundsätzlich in jeder bekannten Weise hergestellt werden.

In der bevorzugten Ausführungsform der Erfindung erfolgt die Applikation der Beschichtung aus dem erfindungsgemäßen Zwei-Komponenten-System und gegebenenfalls die Aushärtung nach dem Verfahren der Reaktionsspritzgusstechnik in geschlossenen Formen. Ebenso bevorzugt in diesem Zusammenhang ist der Verzicht bei der genannten Technik auf eine geschlossene Form, wobei man dann die applikationsfertige Beschichtungsmasse unmittelbar auf geeignete Träger aufträgt und ggf. unter Temperatureinwirkung aushärtet. Diese ausgehärteten Beschichtungen können ggf. im Anschluss durch mechanische Verfahren wie z.B. Polieren nachbearbeitet werden.

Das Verbundbauteil kann beispielsweise aus der thermoplastischen Zusammensetzung vorgefertigt und darauf das erfindungsgemäße Zwei-Komponenten-System aufgebracht und ausreagiert werden. Je nach Reaktivität des Zwei-Komponenten-Systems können die Komponenten A) und B) bereits vorgemischt sein oder während des Auftragens in bekannter Weise vermischt werden. Das Auftragen kann unter anderem durch Sprühen, Rakeln oder Kalandrieren erfolgen. Es ist aber auch möglich, die erfindungsgemäßen Verbundbauteile durch Coextrusion nach bekannten Methoden herzustellen.

In einem weiteren Aspekt der vorliegenden Erfindung wird Verfahren zur Herstellung eines Verbundbauteils bereitgestellt, wobei das Verbundbauteil einen Träger und mindestens eine Beschichtung umfasst, umfassend die Schritte:

(i) Bereitstellen eines Trägers, wobei der Träger eine thermoplastische Zusammensetzung umfasst,
(ii) Aufbringen mindestens des erfindungsgemäßen Zwei-Komponenten-Systems, wobei das Zwei-Komponenten-System in direktem Kontakt mit dem Träger steht und
(iii) Aushärten des Zwei-Komponenten-Systems zu einer Beschichtung.

Dabei wurden die Bevorzugungen des thermoplastischen Trägers bereits oben beschrieben.

Weiterhin ist es bevorzugt, dass dieses Verfahren die Verfahrensschritte (i2) bis (iv2) umfasst, in denen

(i2) in einem ersten Verfahrensschritt die Schmelze einer thermoplastischen Zusammensetzung in eine erste Werkzeugkavität eingespritzt und nachfolgend zu einem Träger abgekühlt wird,
(ii2) in einem zweiten Verfahrensschritt die Kavität des Spritzgusswerkzeugs vergrößert und dadurch ein Spaltraum erzeugt wird,
(iii2) in einem dritten Verfahrensschritt in den so resultierenden Spaltraum des Schritts (ii2) zwischen dem Träger des Verfahrensschritts (i2) und der Werkzeugoberfläche der vergrößerten Kavität das erfindungsgemäße Zwei-Komponenten-System gespritzt wird, wobei das Zwei-Komponenten-System in direktem Kontakt mit der Oberfläche des Trägers ausgehärtet wird, so dass ein Verbundbauteil entsteht und
(iv2) im vierten Verfahrensschritt das Verbundbauteil des Schritts (iii2) aus der Werkzeugkavität entformt wird,

wobei die Verfahrensschritte (i2) bis (iv2) unmittelbar aufeinander folgen.

Durch die unmittelbare Abfolge der Verfahrensschritte wird verhindert, dass die Temperatur des Werkstücks während des Prozesses auf Raumtemperatur abkühlt. Hierdurch wird eine Reduktion der Herstellungszeiten und eine höhere Energieeffizienz des Gesamtverfahrens erreicht.

Die Verfahrensschritte (ii2) und (iii2) können unter Variation des Zwei-Komponenten-Systems mindestens einmal wiederholt werden, wobei nur auf einer oder beiden Seiten des Trägers ein oder mehrere Beschichtung aufgebracht werden, so dass ein Verbundbauteil aus thermoplastischem Träger und mindestens zwei gleichen oder unterschiedlichen Polyurethankomponenten mit gegebenenfalls auch mehr als zweischichtigem Aufbau resultiert.

Vor dem Entformen des Werkstücks in den Schritten (ii2) und (iv2) wird das Werkstück bis zur Formstabilität abgekühlt.

Zur Erzeugung des Spaltraums in Verfahrensschritt (ii2) kann entweder das Spritzgusswerkzeug geöffnet und nachfolgend eine Hälfte der Spritzgusswerkzeugkavität durch eine neue Hälfte mit größeren Hohlformmaßen ausgetauscht, oder das Bauteil von der ersten Werkzeugkavität in eine zweite, hinsichtlich seiner Hohlformmaße größeren Kavität desselben oder eines zweiten Werkzeugs umgesetzt, oder die erste Kavität um ein Spaltmaß geöffnet werden.

Das Umsetzen des Trägers im Verfahrensschritt (ii2) kann nach bekannten Verfahren, wie sie beispielsweise beim Mehrfarbenspritzgießen angewendet werden, erfolgen. Typische Verfahren sind einerseits das Umsetzen mit Drehteller, Wendeplatte, Schiebekavität oder Indexplatte oder vergleichbare Verfahren, bei denen der Träger auf einem Kern verbleibt. Verbleibt der Träger zum Umsetzen auf dem Kern, hat dies den Vorteil, dass die Lage auch nach dem Umsetzen passgenau definiert ist. Andererseits sind aus dem Stand der Technik Verfahren zum Umsetzen eines Trägers bekannt, bei denen der Träger, z.B. mit Hilfe eines Handhabungssystems, aus einer Kavität entnommen und in eine andere Kavität eingelegt wird. Das Umsetzen mit Entnahme des Trägers bietet größeren Gestaltungsspielraum bei der Beschichtung, z.B. bei der Generierung eines Umbugs oder maskierter Bereiche.

Bevorzugt wird die mit dem Zwei-Komponenten-System in Kontakt stehende Oberfläche des Spritzgusswerkzeuges im Verfahrensschritt (iii2) auf eine Temperatur im Bereich 50 bis 160°C, bevorzugt 70 bis 120°C, weiter bevorzugt 80 bis 110°C, und besonders bevorzugt 90 bis 100 °C temperiert.

Die erfindungsgemäßen Verbundbauteile eignen sich besonders als Innen- oder Außenbauteil eines Schienen-, Luftfahrt- oder Kraftfahrzeuges, für Elektro/Elektronikbauteile und IT Bauteile. Besonders geeignet sind solche Verbundbauteile für Ausbauteile im Fahrzeugbau wie z.B. Armaturenbrett, Displays, Tür- oder sonstige Flächenverkleidungen, Lenkräder oder dergleichen. Daher betrifft die vorliegende Erfindung in einem weiteren Aspekt auch die Verwendung des erfindungsgemäßen Verbundbauteils des gemäß des erfindungsgemäßen Verfahren erhaltenen Verbundbauteils als Innen- oder Außenbauteil eines Schienen-, Luftfahrt- oder Kraftfahrzeugs, für Elektro/Elektronikbauteile und IT Bauteile, bevorzugt für Ausbauteile im Fahrzeugbau wie z.B. Armaturenbrett, Displays, Tür- oder sonstige Flächenverkleidungen, Lenkräder oder dergleichen.

Ein weiterer Aspekt der vorliegenden Erfindung ist die Verwendung mindestens eines polysiloxanhaltigen (Meth)acrylats als Comonomer A3) in einer (Meth)acrylatkomponente

A) auf Basis von (Meth)acrylatmonomeren, welche eine Komponente eines Zwei-Komponenten-Systems ist, welches
A) mindestens die (Meth)acrylatkomponente auf Basis von (Meth)acrylatmonomeren, hergestellt durch Umsetzung der (Meth)acryleinheiten mindestens der Komponenten A1),
A2) und A3), wobei
A1) mindestens ein Alkylester der (Meth)acrylsäure ist,
A2) mindestens ein Hydroxyalkylester der (Meth)acrylsäure ist, welcher eine primäre Hydroxy-Gruppe aufweist und wobei die Alkylengruppe des Hydroxyalkylesters linear ist und 2 bis 6 Kohlenstoffatome umfasst, und
A3) mindestens ein polysiloxanhaltiges (Meth)acrylat ist,
wobei die Komponente A) ausschließlich primäre Hydroxygruppen und eine Hydroxyzahl von 80 bis 500 mg KOH/g aufweist, und
B) mindestens ein Polyisocyanat umfasst,
wobei die Komponente A) zusätzlich die Komponente C) umfasst, wobei
C) mindestens ein zwei- oder höherwertigen Alkohol und/oder mindestens ein Polyasparaginsäureester ist,
zur Verbesserung der Haftungseigenschaften des Zwei-Komponenten-Systems.

Ebenso betrifft die vorliegende Erfindung die Verwendung eines Polysiloxans, welches mindestens eine gegenüber Polyisocyanatkomponenten reaktive Gruppe aufweist, in einem Zwei-Komponenten-System, umfassend

A) mindestens eine (Meth)acrylatkomponente auf Basis von (Meth)acrylatmonomeren, hergestellt durch Umsetzung der (Meth)acryleinheiten mindestens der Komponenten A1),
A2) und gegebenenfalls A3), wobei
A1) mindestens ein Alkylester der (Meth)acrylsäure ist,
A2) mindestens ein Hydroxyalkylester der (Meth)acrylsäure ist, welcher eine primäre Hydroxy-Gruppe aufweist und wobei die Alkylengruppe des Hydroxyalkylesters linear ist und 2 bis 6 Kohlenstoffatome umfasst, und
A3) gegebenenfalls mindestens ein polysiloxanhaltiges (Meth)acrylat ist,
wobei die Komponente A) ausschließlich primäre Hydroxygruppen und eine Hydroxyzahl von 80 bis 500 mg KOH/g aufweist, und

B) mindestens ein Polyisocyanat,
wobei die Komponente A) zusätzlich die Komponente C) umfasst, wobei
C) mindestens ein zwei- oder höherwertigen Alkohol und/oder mindestens ein Polyasparaginsäureester ist,
zur Verbesserung der Haftungseigenschaften des Zwei-Komponenten-Systems.

Dabei ist es bei den oben genannten Verwendungen bevorzugt, dass die Haftungseigenschaften des Zwei-Komponenten-Systems in Bezug auf einen Träger, umfassend mindestens ein Polycarbonat, verbessert werden. In diesen erfindungsgemäßen Verwendungen werden die oben näher und bevorzugt beschriebenen Komponenten bevorzugt eingesetzt.

**Beispiele**

Im Rahmen der vorliegenden Erfindung wurden neben den bereits vorab genannten Messmethoden der OH-Gruppenbestimmung und der Säurezahlbestimmung folgende Methoden verwendet:

a) Viskosität, bestimmt mit Spindelviskosimeter Brookfield LV-DV-I+

Die Bestimmung der Viskositäten erfolgte mittels eines Spindelviskosimeter Typ Brookfield LV-DV-I+. Brookfield-Viskosimeter sind Rotationsviskosimeter mit definierten Spindelsätzen als Rotationskörper. Bei den verwendeten Rotationskörpern handelte es sich um einen LV-Spindelsatz. Aufgrund der Temperaturanhängigkeit der Viskosität wurde die Temperaturen von Viskosimeter und Messflüssigkeit während der Messung auf +/- 0,5 °C genau konstant gehalten. Weitere verwendete Materialien neben dem LV-Spindelsatz waren ein thermostatisierbares Wasserbad, ein Thermometer 0 - 100°C (Skalenteile 1 °C bzw. kleiner) und ein Zeitmessgerät (Skalenwerte nicht größer als 0,1 Sekunden). Zur Messung wurden 100 ml der Probe in eine Weithalsflasche gefüllt; temperiert und luftblasenfrei vermessen, nachdem eine vorherige Kalibrierung erfolgt war. Zur Bestimmung der Viskosität wurde das Viskosimeter so zur Probe positioniert, dass die Spindel bis zur Markierung im Produkt eintaucht. Die Messung wird mit Hilfe der Starttaste ausgelöst, wobei darauf geachtet wurde, dass die Messung im günstigen Messbereich von 50 % (+/- 20 %) des maximal messbaren Drehmoments erfolgte. Das Ergebnis der Messung wurde am Display des Viskosimeters in mPas ausgegeben, wobei die Division durch die Dichte (g/ml) die Viskosität in mm2/s liefert.

b) Pendelhärte nach König

Bei der Pendelhärte Bestimmung nach König (DIN 53157 oder EN ISO 1522 Ausgabe April 2007) dient die Dämpfung eines schwingenden Pendels als Maß. Das Pendel mit zwei Edelstahlkugeln wird auf einen Lackfilm gesetzt. Es besteht eine physikalische Beziehung zwischen Dauer der Pendelschwingung, Amplitude und den geometrischen Abmessungen des Pendels. Das viskoelastische Verhalten der Beschichtung ist ausschlaggebend für die Härte. Wird das Pendel in Schwingung versetzt, rollen die Kugeln auf der Oberfläche und üben somit Druck auf sie aus. Die mehr oder weniger starke Rückfederung hängt von der Elastizität ab. Das Fehlen elastischer Kräfte verursacht eine starke Dämpfung der Pendelbewegung. Hohe elastische Kräfte dagegen verursachen nur eine geringe Dämpfung. Pendelhärte nach "König": Schwingungsanzahl in osc. 1 Oszillation = 1,4 Sekunden.

c) Gitterschnittprüfung

Die Prüfung der Haftung erfolgte mittels Gitterschnitt nach der Norm DIN EN ISO 2409 (Ausgabe August 2007).

d) Kratzbeständigkeit mittels Crockmeter

Die Kratzbeständigkeit mittels Crockmeter erfolgte nach der Norm DIN 55654 (Ausgabe August 2015).

e) Messung der Trübung

Der Haze gemäß der ASTM 1003 (Jahrgang 2011) Norm gemessen. Der ΔHaze wird nach folgender Formel ermittelt:

$$\Delta \text{Haze} = \text{Haze (Wert nach Crockmeter)} - \text{Haze (Ausgangswert)}$$

e) Hydrolyselagerung

Die beschichtete Probe wird der Hydrolyselagerung in einem Klimaschrank 72 Stunden bei 90 ± 2 °C und 95 ± 1 % relative Luftfeuchtigkeit unterworfen. Die Haftung der beschichteten Probe wird mittels Gitterschnitt (nach der Norm DIN EN ISO 2409, Ausgabe August 2007) geprüft und mittels Klebebandabriss beurteilt.

f) Glasübergangstemperatur (Tg)

Die Glasübergangstemperatur wird von dem vernetzten Polymerfilm, bestehend aus der Polyolkomponente und dem Polyisocyanathärter nach DIN EN ISO11357-1 (Ausgabe 1997) gemessen. Der Messbereit lag von -50°C bis 150°C mit einer Aufheizrate von 10K/min.

**Beispiel 1 bis 5 und Vergleichsbeispiel 6 (Ausführungsform (a))**

In ein Polymerisationsgefäß mit Tropftrichter, Rührer und Kühlaufsatz wurde das Prozesslösemittel Methyisobutylketon vorgelegt und die Rohstoffe wurden wie in Tabelle 1 angegeben in den Verhältnissen eingesetzt. Im Verlaufe von drei Stunden wurden bei gleichen Temperaturen der Mercapto-funktionelle Regler sowie die (Meth)acrylatmonomere und der Initiator gleichmäßig zu dosiert. Nach beendeter Zugabe wurde noch bei gleicher Temperatur 2 Stunden nachpolymerisiert. Anschließend wurde das Prozesslösemittel destillativ entfernt und die (Meth)acrylatkomponente mit 1,3-Butandiol versetzt.

Tabelle 1

| Rohstoff | Beispiel 1 | Beispiel 2 | Beispiel 3 | Beispiel 4 | Beispiel 5 | Vergleichsbeispiel 6 |
|---|---|---|---|---|---|---|
| Tetrabutylacrylat | 20 | 20 | 20 | 20 | 20 | 20 |
| Hydroxyethylacrylat | 12 | 12 | 12 | 12 | 12 | 12 |
| 4-Hydroxybutylacrylat | 15 | 15 | 15 | 15 | 15 | |
| 2-Hydroxypropylacrylat | | | | | | 13,5 |
| Ethylacrylat | 48 | 43 | 48 | 43 | 51,5 | 53 |
| A3)-1)* | 5 | 10 | | | | |
| A3)-2)** | | | 5 | 10 | 1,5 | 1,5 |
| 1,3-Butandiol | 11 | 11 | 11 | 11 | 18 | 18 |
| Viskosität (mPa*s) | 21.670 | 22.483 | 13.360 | 21.835 | 21.442 | 25.695 |
| OH-Zahl (mg KOH/g) | 258 | 250 | 245 | 244 | 309 | 269 |
| SZ (mg KOH/g) | 7,5 | 0,8 | 0,7 | 0,8 | 1,1 | 1,1 |

* Komponente A3)-1) stellt ein methacrolyl funktionelles Polysiloxan der Formel (I) dar mit $R_1 = C_3H_6$, $R_2 = CH_3$, $R_3 = CH_3$, $F = -O-(C=O)-C(CH_3)=CH_2$ und n = 8 - 9

** Komponente A3)-2) stellt ein ein methacrolyl funktionelles Polysiloxan der Formel (I) dar mit $R_1 = C_3H_6$, $R_2 = CH_3$, $R_3 = CH_3$, $F = -O-(C=O)-C(CH_3)=CH_2$ und n = 27-30

**Beispiel 7, 8 und 13 und Vergleichsbeispiel 9 bis 12 (Ausführungsform (b))**

In ein Polymerisationsgefäß mit Tropftrichter, Rührer und Kühlaufsatz wurde das Prozesslösemittel Methyisobutylketon vorgelegt und die Rohstoffe wurden wie in Tabelle 2 angegeben in den Verhältnissen eingesetzt. Im Verlaufe von drei Stunden wurden bei gleichen Temperaturen der Mercapto-funktionelle Regler sowie die (Meth)acrylatmonomere und der Initiator gleichmäßig zu dosiert. Nach beendeter Zugabe wurde noch bei gleicher Temperatur 2 Stunden nachpolymerisiert. Anschließend wurde das Prozesslösemittel destillativ entfernt und das Bindemittel mit dem jeweiligem funktionalisiertem Polydimetylsiloxan D) und 1,3-Butandiol versetzt.

Tabelle 2

| Rohstoff | Beispiel 7 | Beispiel 8 | Vergleichs-beispiel 9 | Vergleichs-beispiel 10 | Vergleichs-beispiel 11 | Vergleichs-beispiel 12 | Beispiel 13 |
|---|---|---|---|---|---|---|---|
| Tetrabutylacryla t | 20 | 20 | 20 | 20 | 20 | 20 | 20 |
| Hydroxyethylacrylat | 12 | 12 | | | 12 | 12 | 12 |
| 4-Hydroxybutylacrylat | 15 | 15 | 15 | 15 | | | 15 |
| 2-Hydroxypropylacrylat | | | 13,5 | 13,5 | 13,5 | 13,5 | |
| Ethylacrylat | 53 | 53 | 51,5 | 51,5 | 54,5 | 54,5 | 53 |
| D)-1)* | 0,5 | 1,0 | 0,5 | 1,0 | 0,5 | 1,0 | |
| D)-2)** | | | | | | | 1,5 |
| 1,3-Butandiol | 11 | 11 | 18 | 18 | 18 | 18 | 11 |
| Viskosität (mPa*s) | 20.847 | 20.500 | 19.400 | 20.300 | 27.644 | 19.400 | 20.600 |
| OH-Zahl (mg KOH/g) | 245 | 245 | 301 | 302 | 301 | 301 | 245 |
| SZ (mg KOH/g) | 0,9 | 1,0 | 0,8 | 0,9 | 0,5 | 0,8 | 1,0 |

* Komponente D)-1) stellt ein alpha-omega-organomodifiziertes difunktionelles Siloxan der Formel (II) dar mit $R_1 = C_3H_6$, $R_2 = CH_3$, und $G = -OC_2H_4OH$ mit n = 8 - 10.
** Komponente D)-2) stellt ein alpha-omega-organomodifiziertes difunktionelles Siloxan der Formel (II) dar mit $R_1 = C_3H_6$, $R_2 = CH_3$ $G = C_6H_{13}N$ und n = 30

**Vergleichsbeispiel 14**

In ein Polymerisationsgefäß mit Tropftrichter, Rührer und Kühlaufsatz wurde das Prozesslösemittel Methyisobutylketon vorgelegt und im Verlaufe von drei Stunden wurden in zwei separaten Tropftrichtern einmal die Monomere 20g Tetrabutylacrylat, 12g Hydroxyethyacrylat, 15g 4-Hydroxybutylacrylat, 53g Ethylacrylat sowie der Initiator und in einem 2. Tropftrichter der Mercapto-funktionelle Regler bei gleicher Temperatur gleichmäßig zu dosiert. Nach beendeter Zugabe wurde noch bei gleicher Temperatur 2 Stunden nachpolymerisiert. Anschließend wurde das Prozesslösemittel destillativ entfernt und das Bindemittel mit 11g 1,3-Butandiol versetzt.

Viskosität: 20.845 mPa*s

OH-Zahl: 244 mgKOH/g

Säurezahl: 0,9 mgKOH/g

**Herstellung einer Beschichtung Beispiel 15**

Aus den entsprechenden Komponenten A) aus den Beispielen und Vergleichsbeispielen 1 und 14 wurde wie nachstehend ein Klarlack (Tabelle 3) hergestellt. Als Vergleich 1 dient ein verzweigtes Polyesterpolyol basierend auf den Polyesterbausteinen Isophthalsäure und Adipinsäure umgesetzt mit di- und trifunktionellen Alkoholen für In-Mold-Coatings sowie das nichtsiloxanmodifizierte Vergleichsbindemittel aus Beispiel 14.

Tabelle 3

| Rohstoff | V15-1 | 15-2 | 15-3 | 15-4 | 15-5 | 15-6 | V15-7 | 15-8 | 15-9 | V15-10 | V15-11 | V15-12 | V15-13 | V15-14 | 15-15 |
|---|---|---|---|---|---|---|---|---|---|---|---|---|---|---|---|
| Vergleich 1 | 99 | | | | | | | | | | | | | | |
| Vergleichsbeispiel 14 | | | | | | | | | | | | | | 99 | |
| Bsp.-1 | | 99 | | | | | | | | | | | | | |
| Bsp.-2 | | | 99 | | | | | | | | | | | | |
| Bsp.-3 | | | | 99 | | | | | | | | | | | |
| Bsp.-4 | | | | | 99 | | | | | | | | | | |
| Bsp.-5 | | | | | | 99 | | | | | | | | | |
| Vergleichsbsp.-6 | | | | | | | 99 | | | | | | | | |
| Bsp.-7 | | | | | | | | 99 | | | | | | | |
| Bsp.-8 | | | | | | | | | 99 | | | | | | |
| Vergleichsbsp.-9 | | | | | | | | | | 99 | | | | | |
| Vergleichsbsp.-10 | | | | | | | | | | | 99 | | | | |
| Vergleichsbsp.-11 | | | | | | | | | | | | 99 | | | |
| Vergleichshsp.-12 | | | | | | | | | | | | | 99 | | |
| Bsp.-13 | | | | | | | | | | | | | | | 99 |
| Tib kat 218 (1) | 0,02 | 0,02 | 0,02 | 0,02 | 0,02 | 0,02 | 0,02 | 0,02 | 0,02 | 0,02 | 0,02 | 0,02 | 0,02 | 0,02 | 0,02 |
| Tego Wet 260 (2) | 0,1 | 0,1 | 0,1 | 0,1 | 0,1 | 0,1 | 0,1 | 0,1 | 0,1 | 0,1 | 0,1 | 0,1 | 0,1 | 0,1 | 0,1 |
| B) (3) | 174 | 80 | 80 | 80 | 80 | 100,5 | 100,5 | 79,2 | 79 | 97,6 | 97,3 | 97,6 | 97,6 | 79 | 79 |

(1) Tego Wet 260 ist ein Substartnetzadditiv der Fa. Evonik Industries AG (Polyethersiloxan-Copolymer)

(2) Tib Kat 218 ist ein Katalysator der Fa. Tib Chemicals (Dibutylzinndilaurat)

(3) Komponente B): aliphatisches HDI-Trimerisat

Die Beschichtungen aus Beispiel 15 wurden auf eine 3,2mm Polycarbonatplatte (Bisphenol A Polycarbonat) mit einer visuellen Transparenz von $T_{VIS}$ von 88%, mit einem MVR von ca. 19 $cm^3$/(10 min), gemessen bei 300 °C und 1,2 kg Belastung (gemäß ISO 1133-1:2012-03), der Firma Covestro Deutschland AG mit einer Trockenschichtdicke von ca. 120 $\mu$m mittels Rakel appliziert. Anschließend wurde der Lack 60 Minuten bei 120°C im Umluftrockenofen gehärtet.
Anschließend wurden Pendelhärten nach König, Kratzbeständigkeit mittels Crockmeter, und die Haftung nach Hydrolyselagerung bewertet. In Tabelle 4 sind die Prüfergebnisse zusammengefasst.

Tabelle 4

| Beschichtung | Pendelhärte nach König in sec. | Glasübergangstemperatur ausgehärteter Lackfilm in °C | Crockmeter 2000 Hübe, 22,5N ΔHaze | Haftung nach Hydrolyselagerung |
|---|---|---|---|---|
| V15-1 | 124 | 58-60 | 0,1 | GT 5 (komplette Ablösung des Lackfilms vom Substrat) |
| 15-2 | 79 | | 0 | GT 2 |
| 15-3 | 69 | | 0 | GT 0 |
| 15-4 | 94 | | 0 | GT 0 |
| 15-5 | 48 | 36 - 40 | 0 | GT 0 |
| 15-6 | 81 | | 0,53 | GT 3 |
| V15-7 | 69 | 28 - 30 | 0,1 | GT 5 (komplette Ablösung des Lackfilms vom Substrat) |
| 15-8 | 106 | 30-31 | 0 | GT0 |
| 15-9 | 76 | | 0,2 | GT 1 |
| V15-10 | 114 | | 1,8 | GT 5 (komplette Ablösung des Lackfilms vom Substrat) |
| V15-11 | 115 | | 0,2 | GT 4 |
| V15-12 | 85 | | 0,2 | GT 4 |
| V15-13 | 87 | | 0,5 | GT 5 |
| V15-14 | 80 | 18 -22 | 44 | GT 5 (komplette Ablösung des Lackfilms vom Substrat) |
| 15-15 | 68 | | 0,5 | GT 0 |

Wie den Ergebnissen der Tabelle entnommen werden kann, führt der Zusatz einer Siloxankomponente allein (V15-7) oder aber auch die Anwesenheit von primären Hydroxygruppen in Komponente A) allein (V15-14) nicht zu einer ausreichenden Haftung gegenüber dem Träger. Nur durch die Kombination der Zugabe einer Siloxankomponente und die ausschließliche Anwesenheit primärer Hydroxygruppen in Komponente A) zu guten Haftungseigenschaften (15-2 bis 15-6 und 15-8, 15-9 und 15-15).
Weiterhin wurde wie in Tabelle 5 angegeben, die Beständigkeit gegen Hand- und Sonnencreme sowie gegen Aceton und Butylacetat als Lösemittel geprüft.
Bei der Cremebeständigkeit wurde jeweils eine mit Hand- und Sonnencreme versehene Mullbinde auf die Oberfläche der Beschichtung gegeben und anschließend 24 Stunden bei 80°C im Umluftofen belastet. Anschließend wurde der Angriff der Lackoberfläche visuell beurteilt.
Bei der Beständigkeit gegen Lösemittel wurde ein getränkter Wattebausch auf die Oberfläche der Beschichtung gegeben und der Angriff der Lackoberfläche visuell nach 1, 5, 15, 30 und 60 Minuten visuell beurteilt.

Tabelle 5

| Beschichtung | Handcreme 24h 80°C. | Sonnencreme 24h 80°C | Aceton 1, 5,15,30, 60 min | Butylacetat 1,5,15,30,60 min |
|---|---|---|---|---|
| V15-1 | 1 | 2 | 1/2/2/2/2 | 1/1/1/2/2 |
| 15-2 | 1 | 2 | 1/2/3/3/3 | 1/1/1/2/2 |
| 15-3 | 1 | 2 | 1/2/3/3/3 | 1/1/1/2/2 |
| 15-4 | 1 | 2 | 1/2/3/3/3 | 1/1/1/2/2 |
| 15-5 | 1 | 1 | 1/2/2/3/3 | 1/1/1/2/2 |
| 15-6 | 1 | 1 | 1/2/2/3/3 | 1/1/1/2/2 |
| V15-7 | 2 | 2 | 1/2/3/3/3 | 1/1/1/1/1 |
| 15-8 | 2 | 2 | 1/2/3/3/3 | 1/1/1/2/2 |
| 15-9 | 2 | 1 | 1/2/3/3/3 | 1/1/1/2/2 |
| V15-10 | 2 | 2 | 1/2/3/3/3 | 1/1/1/2/2 |
| V15-11 | 2 | 2 | 1/2/3/3/3 | 1/1/1/2/3 |
| V15-12 | 1 | 2 | 1/1/1/3/3 | 1/1/1/1/1 |
| V15-13 | 1 | 2 | 1/1/3/3/3 | 1/1/1/1/1 |
| V15-14 | 1 | 2 | 1/1/3/3/3 | 1/1/1/1/1 |
| 15-15 | 1 | 2 | 1/1/3/3/3 | 1/1/1/1/1 |

Ranking / Bewertung:

1 = keine Veränderung der Lackoberfläche

2 = leichter Angriff der Lackoberfläche

3 = starker Angriff der Lackoberfläche

Wie den Ergebnissen aus Tabelle 5 entnommen werden kann, weisen die erfindungsgemäßen Beschichtungen eine gute Haftung bei gleichzeitig guten Beständigkeiten gegenüber Hand- und Sonnencreme sowie gegen Aceton und Butylacetat auf.

## Patentansprüche

**1.** Zwei-Komponenten-System, umfassend die Komponenten A) und B), wobei

A) mindestens eine (Meth)acrylatkomponente auf Basis von (Meth)acrylatmonomeren ist, welche durch Umsetzung der (Meth)acryleinheiten mindestens der Komponenten A1) und A2) hergestellt ist, wobei

A1) mindestens ein Alkylester der (Meth)acrylsäure ist und
A2) mindestens ein Hydroxyalkylester der (Meth)acrylsäure ist, welcher eine primäre Hydroxygruppe aufweist und wobei die Alkylengruppe des Hydroxyalkylesters linear ist und 2 bis 6 Kohlenstoffatome umfasst,

wobei die Komponente A) ausschließlich primäre Hydroxygruppen und eine Hydroxyzahl von 80 bis 500 mg KOH/g aufweist, wobei die Hydroxyzahl titrimetrisch bestimmt wird, und
B) mindestens ein Polyisocyanat ist,
wobei die Komponente A) zusätzlich die Komponente C) umfasst, wobei
C) mindestens ein zwei- oder höherwertigen Alkohol und/oder mindestens ein Polyasparaginsäureester ist,
**dadurch gekennzeichnet, dass**

(a) die Komponente A) durch Umsetzung der (Meth)acryleinheiten mindestens der Komponenten A1), A2) und A3) hergestellt ist, wobei
A3) mindestens ein polysiloxanhaltiges (Meth)acrylat ist
und / oder
(b) die Komponenten A) zusätzlich die Komponente D) umfasst, wobei

D) ein Polysiloxan ist, welches mindestens eine gegenüber Komponente B) reaktive Gruppe aufweist.

**2.** Zwei-Komponenten-System nach Anspruch 1, **dadurch gekennzeichnet, dass** die Komponenten A) und B) in Summe maximal 3 Gew.-% eines Lösemittels bezogen auf das Gesamtgewicht des Zwei-Komponenten-Systems enthalten.

**3.** Zwei-Komponenten-System nach Anspruch 1 oder 2, **dadurch gekennzeichnet, dass** die Komponente A) hergestellt ist durch Umsetzung der (Meth)acryleinheiten mindestens der Komponenten A1) und A2), wobei

A1) mindestens zwei voneinander unterschiedliche Alkylester der (Meth)acrylsäure sind und
A2) mindestens zwei voneinander unterschiedliche Hydroxyalkylester der (Meth)acrylsäure sind, welche jeweils eine primäre Hydroxy-Gruppe aufweisen und wobei die Alkylengruppen der Hydroxyalkylester jeweils linear sind und 2 bis 6 Kohlenstoffatome umfassen.

**4.** Zwei-Komponenten-System nach Anspruch 3, **dadurch gekennzeichnet, dass** die Komponente A2) mindestens zwei voneinander unterschiedliche Hydroxyalkylester umfasst und davon die eine Alkylengruppen des einen Hydroxyalkylesters 2 oder 3 Kohlenstoffatome umfasst und die Alkylengruppe des mindestens einen anderen Hydroxyalkylesters 4 oder 5 Kohlenstoffatome umfasst.

**5.** Zwei-Komponenten-System nach einem der Ansprüche 1 bis 4, **dadurch gekennzeichnet, dass** das mindestens eine polysiloxanhaltiges (Meth)acrylat A3) dargestellt wird durch die Formel (I)

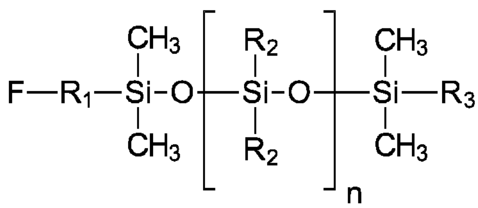

(I),

in der $R_1$ für eine Alkylengruppe steht,
$R_2$ jeweils unabhängig voneinander für eine Alkyl- oder Arylgruppe steht,
$R_3$ für eine Alkylgruppe steht,
F für eine Acryloxy oder Methacryloxygruppe steht und
n die mittlere Anzahl an Wiederholungseinheiten darstellt und zwischen 1 bis 70 liegt.

**6.** Zwei-Komponenten-System nach einem der Ansprüche 1 bis 5, **dadurch gekennzeichnet, dass** das Polysiloxan der Komponente D), dargestellt wird durch die Formel (II)

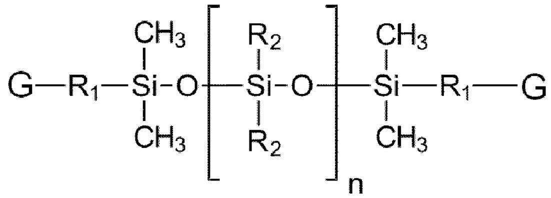

(II),

in der $R_1$ jeweils unabhängig voneinander für eine Alkylengruppe steht,
$R_2$ jeweils unabhängig voneinander für eine Alkyl- oder Arylgruppe steht,

G jeweils unabhängig voneinander für eine Amino-, Mercapto-, Hydroxy- oder Hydroxy-Polyethergruppe steht und
n die mittlere Anzahl an Wiederholungseinheiten darstellt und zwischen 1 bis 50 liegt.

**7.** Zwei-Komponenten-System nach einem der Ansprüche 1 bis 6, **dadurch gekennzeichnet, dass** das mindestens eine Polyisocyanat der Komponente B) ausgewählt wird aus der Gruppe, bestehend aus aromatischen, araliphatischen, aliphatischen und cycloaliphatischen Polyisocyanaten, welche gegebenenfalls Iminooxadiazindion-, Isocyanurat-, Uretdion-, Urethan-, Allophanat-, Biuret-, Harnstoff-, Oxadiazintrion, Oxazolidinon-, Acylharnstoff- und/oder Carbodiimid-Strukturen aufweisen.

**8.** Verbundbauteil, umfassend einen Träger und mindestens eine Beschichtung, welche in direktem Kontakt mit dem Träger steht,

wobei der Träger eine thermoplastische Zusammensetzung umfasst und
die Beschichtung erhalten wird durch Aushärtung des Zwei-Komponenten-Systems nach einem der Ansprüche 1 bis 7.

**9.** Verbundbauteil nach Anspruch 8, **dadurch gekennzeichnet, dass** die thermoplastische Zusammensetzung des Trägers mindestens ein Polycarbonat umfasst.

**10.** Verfahren zur Herstellung eines Verbundbauteils, umfassen einen Träger und mindestens eine Beschichtung, umfassend die Schritte:

(i) Bereitstellen eines Trägers, wobei der Träger eine thermoplastische Zusammensetzung umfasst,
(ii) Aufbringen mindestens des Zwei-Komponenten-Systems nach einem der Ansprüche 1 bis 7, wobei das Zwei-Komponenten-System in direktem Kontakt mit dem Träger steht und
(iii) Aushärten des Zwei-Komponenten-Systems zu einer Beschichtung.

**11.** Verfahren nach Anspruch 10, umfassend die Verfahrensschritte (i2) bis (iv2), in denen

(i2) in einem ersten Verfahrensschritt die Schmelze einer thermoplastischen Zusammensetzung in eine erste Werkzeugkavität eingespritzt und nachfolgend zu einem Träger abgekühlt wird,
(ii2) in einem zweiten Verfahrensschritt die Kavität des Spritzgusswerkzeugs vergrößert und dadurch ein Spaltraum erzeugt wird,
(iii2) in einem dritten Verfahrensschritt in den so resultierenden Spaltraum des Schritts (ii2) zwischen dem Träger des Verfahrensschritts (i2) und der Werkzeugoberfläche der vergrößerten Kavität das Zwei-Komponenten-System nach einem der Ansprüche 1 bis 7 gespritzt wird, wobei das Zwei-Komponenten-System nach einem der Ansprüche 1 bis 7 in direktem Kontakt mit der Oberfläche des Trägers ausgehärtet wird, so dass ein Verbundbauteil entsteht und
(iv2) im vierten Verfahrensschritt das Verbundbauteil des Schritts (iii2) aus der Werkzeugkavität entformt wird, wobei die Verfahrensschritte (i2) bis (iv2) unmittelbar aufeinander folgen.

**12.** Verwendung eines Verbundbauteils nach einem der Ansprüche 8 oder 9 oder des gemäß Anspruch 10 oder 11 erhaltenen Verbundbauteils als Innen- oder Außenbauteil eines Schienen-, Luftfahrt- oder Kraftfahrzeugs, für Elektro/Elektronikbauteile und IT Bauteile.

**13.** Verwendung mindestens eines polysiloxanhaltigen (Meth)acrylats als Comonomer A3) in einer (Meth)acrylatkomponente A) auf Basis von (Meth)acrylatmonomeren, welche eine Komponente eines Zwei-Komponenten-Systems ist, welches

A) mindestens die (Meth)acrylatkomponente auf Basis von (Meth)acrylatmonomeren, hergestellt durch Umsetzung der (Meth)acryleinheiten mindestens der Komponenten A1), A2) und A3), wobei

A1) mindestens ein Alkylester der (Meth)acrylsäure ist,
A2) mindestens ein Hydroxyalkylester der (Meth)acrylsäure ist, welcher eine primäre Hydroxy-Gruppe aufweist und wobei die Alkylengruppe des Hydroxyalkylesters linear ist und 2 bis 6 Kohlenstoffatome umfasst, und
A3) mindestens ein polysiloxanhaltiges (Meth)acrylat ist,

wobei die Komponente A) ausschließlich primäre Hydroxygruppen und eine Hydroxyzahl von 80 bis 500 mg KOH/g aufweist, wobei die Hydroxyzahl titrimetrisch bestimmt wird, und
B) mindestens ein Polyisocyanat umfasst,
wobei die Komponente A) zusätzlich die Komponente C) umfasst, wobei
C) mindestens ein zwei- oder höherwertigen Alkohol und/oder mindestens ein Polyasparaginsäureester ist,
zur Verbesserung der Haftungseigenschaften des Zwei-Komponenten-Systems.

**14.** Verwendung eines Polysiloxans, welches mindestens eine gegenüber Polyisocyanatkomponenten reaktive Gruppe aufweist, in einem Zwei-Komponenten-System, umfassend

A) mindestens eine (Meth)acrylatkomponente auf Basis von (Meth)acrylatmonomeren, hergestellt durch Umsetzung der (Meth)acryleinheiten mindestens der Komponenten A1), A2) und gegebenenfalls A3), wobei

A1) mindestens ein Alkylester der (Meth)acrylsäure ist,
A2) mindestens ein Hydroxyalkylester der (Meth)acrylsäure ist, welcher eine primäre Hydroxy-Gruppe aufweist und wobei die Alkylengruppe des Hydroxyalkylesters linear ist und 2 bis 6 Kohlenstoffatome umfasst, und
A3) gegebenenfalls mindestens ein polysiloxanhaltiges (Meth)acrylat ist,

wobei die Komponente A) ausschließlich primäre Hydroxygruppen und eine Hydroxyzahl von 80 bis 500 mg KOH/g aufweist, wobei die Hydroxyzahl titrimetrisch bestimmt wird, und
B) mindestens ein Polyisocyanat,
wobei die Komponente A) zusätzlich die Komponente C) umfasst, wobei
C) mindestens ein zwei- oder höherwertigen Alkohol und/oder mindestens ein Polyasparaginsäureester ist,
zur Verbesserung der Haftungseigenschaften des Zwei-Komponenten-Systems.

**15.** Verwendung nach Anspruch 13 oder Anspruch 14, wobei die Haftungseigenschaften des Zwei-Komponenten-Systems in Bezug auf einen Träger, umfassend mindestens ein Polycarbonat, verbessert werden.

**Claims**

**1.** Two-component system comprising the components A) and B), wherein

A) is at least one (meth)acrylate component based on (meth)acrylate monomers which is produced by reaction of the (meth)acryloyl units of at least the components A1) and A2), wherein

A1) is at least one alkyl ester of (meth)acrylic acid and
A2) is at least one hydroxyalkyl ester of (meth)acrylic acid which comprises a primary hydroxyl group and wherein the alkylene group of the hydroxyalkyl ester is linear and comprises 2 to 6 carbon atoms,

wherein the component A) comprises exclusively primary hydroxyl groups and has a hydroxyl number of 80 to 500 mg KOH/g, wherein the hydroxyl number is determined by titrimetry, and
B) is at least one polyisocyanate,
wherein the component A) additionally comprises the component C), wherein
C) is at least one dihydric or polyhydric alcohol and/or at least one polyaspartic ester, **characterized in that**

(a) the component A) is produced by reaction of the (meth)acryloyl units of at least the components A1), A2) and A3), wherein
A3) is at least one polysiloxane-containing (meth)acrylate
and/or
(b) the component A) additionally comprises the component D), wherein

D) is a polysiloxane which comprises at least one group reactive toward component B).

**2.** Two-component system according to Claim 1, **characterized in that** the components A) and B) altogether contain not more than 3% by weight of a solvent based on the total weight of the two-component system.

3. Two-component system according to Claim 1 or 2, **characterized in that** the component A) is produced by reaction of the (meth)acryloyl units of at least the components A1) and A2), wherein

A1) are at least two mutually distinct alkyl esters of (meth)acrylic acid and
A2) are at least two mutually distinct hydroxyalkyl esters of (meth)acrylic acid which each have a primary hydroxyl group and wherein the alkylene groups of the hydroxyalkyl esters are each linear and comprise 2 to 6 carbon atoms.

4. Two-component system according to Claim 3, **characterized in that** the component A2) comprises at least two mutually distinct hydroxyalkyl esters and the alkylene group of one hydroxyalkyl ester comprises 2 or 3 carbon atoms and the alkylene group of the at least one other hydroxyalkyl ester comprises 4 or 5 carbon atoms.

5. Two-component system according to any of Claims 1 to 4, **characterized in that** the at least one polysiloxane-containing (meth)acrylate A3) conforms to the formula (I)

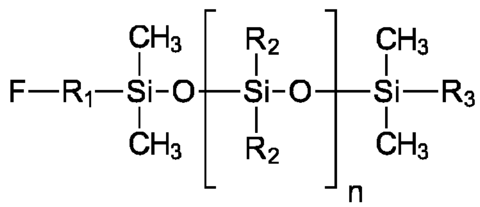

(I),

in which $R_1$ represents an alkylene group,
$R_2$ each independently of one another represent an alkyl or aryl group,
$R_3$ represents an alkyl group,
F represents an acryloxy or methacryloxy group and
n represents the average number of repeating units and is between 1 to 70.

6. Two-component system according to any of Claims 1 to 5, **characterized in that** the polysiloxane of the component D) conforms to the formula (II)

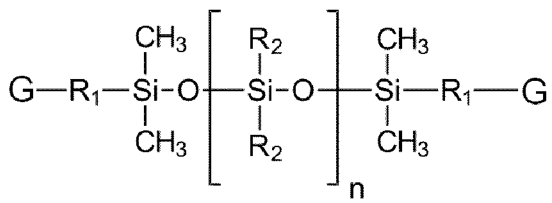

(II),

in which $R_1$ each independently of one another represent an alkylene group,
$R_2$ each independently of one another represent an alkyl or aryl group,
G each independently of one another represent an amino, mercapto, hydroxyl or hydroxypolyether group and
n represents the average number of repeating units and is between 1 to 50.

7. Two-component system according to any of Claims 1 to 6, **characterized in that** the at least one polyisocyanate of the component B) is selected from the group consisting of aromatic, araliphatic, aliphatic and cycloaliphatic polyisocyanates which optionally comprise iminooxadiazinedione, isocyanurate, uretdione, urethane, allophanate, biuret, urea, oxadiazinetrione, oxazolidinone, acylurea and/or carbodiimide structures.

8. Composite part comprising a carrier and at least one coating in direct contact with the carrier,

wherein the carrier comprises a thermoplastic composition and
the coating is obtained by curing the two-component system according to any of Claims 1 to 7.

**9.** Composite part according to Claim 8, **characterized in that** the thermoplastic composition of the carrier comprises at least one polycarbonate.

**10.** Process for producing a composite part comprising a carrier and at least one coating comprising the steps of:

(i) providing a carrier, wherein the carrier comprises a thermoplastic composition,
(ii) applying at least the two-component system according to any of Claims 1 to 7, wherein the two-component system is in direct contact with the carrier, and
(iii) curing the two-component system to afford a coating.

**11.** Process according to Claim 10, comprising the process steps (i2) to (iv2), in which

(i2) in a first process step the melt of a thermoplastic composition is injected into a first mould cavity and subsequently cooled to afford a carrier,
(ii2) in a second process step the cavity of the injection moulding tool is enlarged to produce a gap,
(iii2) in a third process step the two-component system according to any of Claims 1 to 7 is injected into the thus produced gap of step (ii2) between the carrier of the process step (i2) and the mould surface of the enlarged cavity, wherein the two-component system according to any of Claims 1 to 7 is cured in direct contact with the surface of the carrier to form a composite part and
(iv2) in the fourth process step the composite part of step (iii2) is demoulded from the mould cavity,

wherein the process steps (i2) to (iv2) follow one another in immediate succession.

**12.** Use of a composite part according to either of Claims 8 or 9 or of the composite part obtained according to Claim 10 or 11 as an interior or exterior component of a rail, aerospace or motor vehicle, for electricals/electronics components and IT components.

**13.** Use of at least one polysiloxane-containing (meth)acrylate as comonomer A3) in a (meth)acrylate component A) based on (meth)acrylate monomers which is a component of a two-component system which comprises

A) at least the (meth)acrylate component based on (meth)acrylate monomers produced by reaction of the (meth)acryloyl units of at least the components A1), A2) and A3), wherein

A1) is at least one alkyl ester of (meth)acrylic acid,
A2) is at least one hydroxyalkyl ester of (meth)acrylic acid which comprises a primary hydroxyl group and wherein the alkylene group of the hydroxyalkyl ester is linear and comprises 2 to 6 carbon atoms and
A3) is at least one polysiloxane-containing (meth)acrylate,

wherein the component A) comprises exclusively primary hydroxyl groups and has a hydroxyl number of 80 to 500 mg KOH/g, wherein the hydroxyl number is determined by titrimetry, and
B) comprises at least one polyisocyanate,
wherein the component A) additionally comprises the component C), wherein
C) is at least one dihydric or polyhydric alcohol and/or at least one polyaspartic ester,
for improving the adhesion properties of the two-component system.

**14.** Use of a polysiloxane which comprises at least one group reactive toward polyisocyanate components in a two-component system comprising

A) at least one (meth)acrylate component based on (meth)acrylate monomers produced by reaction of the (meth)acryloyl units of at least the components A1), A2) and optionally A3), wherein

A1) is at least one alkyl ester of (meth)acrylic acid,
A2) is at least one hydroxyalkyl ester of (meth)acrylic acid which comprises a primary hydroxyl group and wherein the alkylene group of the hydroxyalkyl ester is linear and comprises 2 to 6 carbon atoms and
A3) is optionally at least one polysiloxane-containing (meth)acrylate,

wherein the component A) comprises exclusively primary hydroxyl groups and has a hydroxyl number of 80 to 500 mg KOH/g, wherein the hydroxyl number is determined by titrimetry, and

B) at least one polyisocyanate,
wherein the component A) additionally comprises the component C), wherein
C) is at least one dihydric or polyhydric alcohol and/or at least one polyaspartic ester,
for improving the adhesion properties of the two-component system.

**15.** Use according to Claim 13 or Claim 14, wherein the adhesion properties of the two-component system with respect to a carrier comprising at least one polycarbonate are improved.

## Revendications

**1.** Système à deux composants, comprenant les composants A) et B),

A) étant au moins un composant de type (méth)acrylate à base de monomères de type (méth)acrylate, qui est préparé par transformation des motifs de type (méth)acryle au moins des composants A1) et A2),

A1) étant au moins un ester d'alkyle d'acide (méth)acrylique et
A2) étant au moins un ester d'hydroxyalkyle d'acide (méth)acrylique, qui présente un groupe hydroxy primaire et le groupe alkylène de l'ester d'hydroxyalkyle étant linéaire et comprenant 2 à 6 atomes de carbone,

le composant A) présentant exclusivement des groupes hydroxy primaire et un indice d'hydroxy de 80 à 500 mg de KOH/g, l'indice d'hydroxy étant déterminé par titrage, et
B) étant au moins un polyisocyanate,
le composant A) comprenant de plus le composant C),
C) étant au moins un alcool divalent ou supérieur et/ou au moins un ester de poly(acide aspartique),
**caractérisé en ce que**

(a) le composant A) est préparé par transformation des motifs (méth)acryle au moins des composants A1), A2) et A3),
A3) étant au moins un (méth)acrylate contenant un polysiloxane
et/ou
(b) le composant A) comprend de plus le composant D),

D) étant un polysiloxane qui présente au moins un groupe réactif envers le composant B).

**2.** Système à deux composants selon la revendication 1, **caractérisé en ce que** les composants A) et B) contiennent au total au maximum 3 % en poids d'un solvant par rapport au poids total du système à deux composants.

**3.** Système à deux composants selon la revendication 1 ou 2, **caractérisé en ce que** le composant A) est préparé par transformation des motifs (méth)acryle au moins des composants A1) et A2),

A1) étant au moins deux esters d'alkyle d'acide (méth)acrylique différents les uns des autres et
A2) étant au moins deux esters d'hydroxyalkyle d'acide (méth)acrylique différents les uns des autres, qui présentent à chaque fois un groupe hydroxy primaire et les groupes alkylène des esters d'hydroxyalkyle étant à chaque fois linéaires et comprenant 2 à 6 atomes de carbone.

**4.** Système à deux composants selon la revendication 3, **caractérisé en ce que** le composant A2) comprend au moins deux esters d'hydroxyalkyle différents les uns des autres et parmi ceux-ci le groupe alkylène d'un ester d'hydroxyalkyle comprend 2 ou 3 atomes de carbone et le groupe alkylène de l'au moins un autre ester d'hydroxyalkyle comprend 4 ou 5 atomes de carbone.

**5.** Système à deux composants selon l'une quelconque des revendications 1 à 4, **caractérisé en ce que** l'au moins un (méth)acrylate A3) contenant un polysiloxane est représenté par la formule (I)

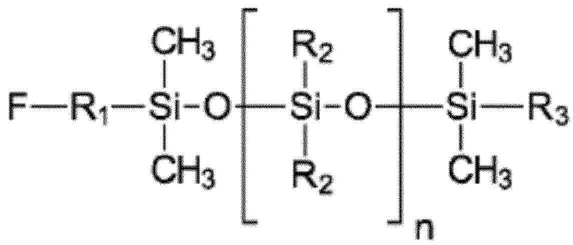

(I),

dans laquelle $R_1$ représente un groupe alkylène,
$R_2$ représente à chaque fois indépendamment l'un de l'autre un groupe alkyle ou aryle,
$R_3$ représente un groupe alkyle,
F représente un groupe acryloxy ou méthacryloxy et
n indique le nombre moyen de motifs répétitifs et se situe entre 1 et 70.

6. Système à deux composants selon l'une quelconque des revendications 1 à 5, **caractérisé en ce que** le polysiloxane du composant D) est représenté par la formule (II)

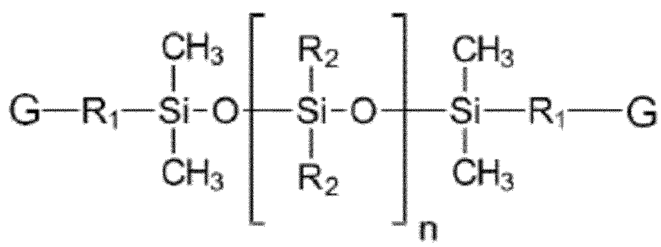

(II),

dans laquelle $R_1$ représente à chaque fois indépendamment l'un de l'autre un groupe alkylène,
$R_2$ représente à chaque fois indépendamment l'un de l'autre un groupe alkyle ou aryle,
G représente à chaque fois indépendamment l'un de l'autre un groupe amino, mercapto, hydroxy ou hydroxy-polyéther et
n indique le nombre moyen de motifs répétitifs et se situe entre 1 et 50.

7. Système à deux composants selon l'une quelconque des revendications 1 à 6, **caractérisé en ce que** l'au moins un polyisocyanate du composant B) est choisi dans le groupe constitué par des polyisocyanates aromatiques, araliphatiques, aliphatiques et cycloaliphatiques, qui présentent éventuellement des structures de type iminooxadiazinedione, isocyanurate, uretdione, uréthane, allophanate, biuret, urée, oxadiazinetrione, oxazolidinone, acylurée et/ou carbodiimide.

8. Élément composite, comprenant un support et au moins un revêtement qui est en contact direct avec le support, le support comprenant une composition thermoplastique et le revêtement étant obtenu par durcissement du système à deux composants selon l'une quelconque des revendications 1 à 7.

9. Élément composite selon la revendication 8, **caractérisé en ce que** la composition thermoplastique du support comprend au moins un polycarbonate.

10. Procédé pour la préparation d'un élément composite, comprenant un support et au moins un revêtement, comprenant les étapes :

(i) mise à disposition d'un support, le support comprenant une composition thermoplastique,
(ii) application au moins du système à deux composants selon l'une quelconque des revendications 1 à 7, le système à deux composants étant en contact direct avec le support et
(iii) durcissement du système à deux composants pour donner un revêtement.

**11.** Procédé selon la revendication 10, comprenant les étapes de procédé (i2) à (iv2), dans lesquelles (i2) dans une première étape de procédé, la masse fondue d'une composition thermoplastique est injectée dans une première cavité d'outil et ensuite est refroidie pour donner un support,

(ii2) dans une deuxième étape de procédé, la cavité de l'outil de moulage par injection est agrandie et un interstice est ainsi généré,
(iii2) dans une troisième étape de procédé, le système à deux composants selon l'une quelconque des revendications 1 à 7 est injecté dans l'interstice ainsi résultant de l'étape (ii2) entre le support de l'étape de procédé (i2) et la surface d'outil de la cavité agrandie, le système à deux composants selon l'une quelconque des revendications 1 à 7 étant durci en contact direct avec la surface du support, de sorte qu'un élément composite est produit et
(iv2) dans la quatrième étape de procédé, l'élément composite de l'étape (iii2) est démoulé de la cavité d'outil,

les étapes de procédé (i2) à (iv2) se suivant directement les unes après les autres.

**12.** Utilisation d'un élément composite selon l'une quelconque des revendications 8 et 9 ou de l'élément composite obtenu selon la revendication 10 ou 11 en tant qu'élément intérieur ou extérieur d'un véhicule ferroviaire, d'un aéronef ou d'un véhicule à moteur, pour des composants électriques/électroniques et des composants informatiques.

**13.** Utilisation d'au moins un (méth)acrylate contenant un polysiloxane en tant que comonomère A3) dans un composant A) de (méth)acrylate à base de monomères de type (méth)acrylate, qui est un composant d'un système à deux composants, qui comprend

A) au moins le composant de type (méth)acrylate à base de monomères de type (méth)acrylate, préparé par transformation des motifs de type (méth)acryle au moins des composants A1), A2) et A3),

A1) étant au moins un ester d'alkyle d'acide (méth)acrylique et
A2) étant au moins un ester d'hydroxyalkyle d'acide (méth)acrylique, qui présente un groupe hydroxy primaire et le groupe alkylène de l'ester d'hydroxyalkyle étant linéaire et comprenant 2 à 6 atomes de carbone, et
A3) étant au moins un (méth)acrylate contenant un polysiloxane,

le composant A) présentant exclusivement des groupes hydroxy primaire et un indice d'hydroxy de 80 à 500 mg de KOH/g, l'indice d'hydroxy étant déterminé par titrage, et
B) au moins un polyisocyanate,
le composant A) comprenant de plus le composant C),
C) au moins un alcool divalent ou supérieur et/ou au moins un ester de poly(acide aspartique),
pour l'amélioration des propriétés d'adhérence du système à deux composants.

**14.** Utilisation d'un polysiloxane qui présente au moins un groupe réactif envers des composants de type polyisocyanates, dans un système à deux composants, comprenant

A) au moins un composant de type (méth)acrylate à base de monomères de type (méth)acrylate, préparé par transformation des motifs de type (méth)acryle au moins des composants A1), A2) et éventuellement A3),

A1) étant au moins un ester d'alkyle d'acide (méth)acrylique et
A2) étant au moins un ester d'hydroxyalkyle d'acide (méth)acrylique, qui présente un groupe hydroxy primaire et le groupe alkylène de l'ester d'hydroxyalkyle étant linéaire et comprenant 2 à 6 atomes de carbone, et
A3) étant éventuellement au moins un (méth)acrylate contenant un polysiloxane,

le composant A) présentant exclusivement des groupes hydroxy primaire et un indice d'hydroxy de 80 à 500 mg de KOH/g, l'indice d'hydroxy étant déterminé par titrage, et
B) au moins un polyisocyanate,
le composant A) comprenant de plus le composant C),
C) au moins un alcool divalent ou supérieur et/ou au moins un ester de poly(acide aspartique),
pour l'amélioration des propriétés d'adhérence du système à deux composants.

**15.** Utilisation selon la revendication 13 ou la revendication 14, les propriétés d'adhérence du système à deux composants étant améliorées par rapport à un support, comprenant au moins un polycarbonate.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 0943637 A1
- EP 1484350 A2
- EP 0693512 A1
- EP 0006517 A1
- EP 1247823 A2
- US 5519089 A
- US 5346958 A
- US 6001947 A
- US 2018016381 A1
- EP 1494349 A2
- US 5710201 A
- WO 2015039837 A1
- EP 0550259 A1
- WO 2015055719 A1
- US 20110159292 A1
- WO 2004000905 A